# EUROPÄISCHE PATENTSCHRIFT

(11) **EP 1 857 932 B1**
(45) Veröffentlichungstag und Bekanntmachung des Hinweises auf die Patenterteilung: **19.09.2018**
(21) Anmeldenummer: 07108146.7
(22) Anmeldetag: 14.05.2007
(51) Int. Cl.: G06F 9/54, G06F 9/451

(54) **Verfahren zur anwendungsübergreifenden Verwendung von Objekten in einem elektronischen Endgerät, Terminal-Ebenen-Modell sowie elektronisches Endgerät**
Method for cross-application utilisation of objects in electronic end equipment, terminal level model and electronic end equipment
Procédé d'utilisation au-delà de l'application d'objets dans un terminal électronique, modèle de niveau terminal tout comme terminal électronique

(30) Priorität: 17.05.2006 DE 102006023191
(43) Veröffentlichungstag der Anmeldung: 21.11.2007
(73) Patentinhaber: Vodafone GmbH, 40549 Düsseldorf (DE)
(72) Erfinder: Degen, Helmut, 40470 Düsseldorf (DE); Tölle, Sonja, 58091 Hagen (DE)
(74) Vertreter: Müller, Thomas

(56) Entgegenhaltungen:
- WO-A-98/19239
- SIEZEN S: "Symbian OS Version 8.0 product description" INTERNET CITATION, [Online] 1. Februar 2004 (2004-02-01), XP002343050 Gefunden im Internet: URL:http://www.symbian.com/technology/Symb ianOSv8_funcdesc_2.1.pdf> [gefunden am 2005-08-31]
- TANENBAUM A S ED - TANENBAUM A S: "COMPUTER NETWORKS, CHAPTER 8 (NETWORK SECURITY)", 1 January 2003 (2003-01-01), COMPUTER NETWORKS, PEARSON EDUCATION INTERNATIONAL, UPPER SADDLE RIVER, NJ, PAGE(S) 772 - 776, XP000863828, ISBN: 978-0-13-038488-1

## Beschreibung

Die vorliegende Erfindung betrifft Verfahren zur anwendungsübergreifenden Verwendung von Objekten auf einem Terminal-Ebene-Modell in einem elektronischen Endgerät. Ferner betrifft die Erfindung ein Terminal-Ebenen-Modell zur anwendungsübergreifenden Verwendung von Objekten auf einem elektronischen Endgerät sowie ein elektronisches Endgerät zur anwendungsübergreifenden Verwendung von Objekten.

Elektronische Endgeräte, im folgenden auch als "Terminal" bezeichnet, insbesondere funkbasierte Endgeräte, wie beispielsweise Laptops, PDA's (PDA = Persönlicher Digitaler Assistent), Smartphones oder Mobiletelefone, weisen von Generation zu Generation immer mehr Objekte bzw. Anwendungen auf. Die Nutzer der elektronischen Endgeräte sind mit einer Vielzahl von Objekten, Datendiensten und mobilen Anwendungen konfrontiert, die kaum noch nachvollziehbar oder bedienbar für den Nutzer sind.

Nachteilig ist bei den elektronischen Endgeräten, dass Objekte von einer Applikation nicht von anderen Applikationen genutzt werden können. Ferner ist nachteilig, dass jeder Hersteller eines elektronischen Endgerätes, insbesondere eines Mobiletelefons, eigene Objekte und Applikationen definiert. Der Nutzer ist somit immer stärker an einen Hersteller gebunden, da nur innerhalb einer Modellreihe eines Herstellers die Bedienung und Darstellung weitestgehend konstant bleibt. Wechselt ein Nutzer den Hersteller eines Mobiletelefons, ist es für ihn schwierig sich auf die geänderte Menüführung, die unterschiedliche Darstellung und Anwendung von Objekten und Applikationen einzustellen.

Mobilfunkbetreiber, die ihren Teilnehmern neue Objekte und Applikationen/Anwendungen anbieten möchten, haben die Schwierigkeit den Teilnehmern den einfachen Nutzen dieser Objekte und Applikationen/Anwendungen den Kunden beizubringen. So konnten Mobilfunkbetreiber bislang ihren Teilnehmern nur schwierig beibringen, wie man beispielsweise neue Multimedia-Funktionen nutzt, die ihre Netze bieten. Die Komplexität der Software und insbesondere der Menüführung wird für die Mobilfunkbetreiber häufig als unangenehm empfunden. Viele Teilnehmer verzichten auf Innovationen in einem Mobiltelefon aufgrund der schwierigen Bedienung und unübersichtlichen Darstellung von Objekten und Applikationen/Anwendungen. Insbesondere der Wechsel zwischen Herstellern von Mobiletelefonen wird durch die zunehmende Komplexität und die wachsende Unübersichtlichkeit der Funktionen des Mobiltelefons erschwert. Dies liegt aber nicht im Sinne der Mobilfunkbetreiber, da sie den Teilnehmer ein breite Palette verschiedener Mobiltelefone anbieten möchte, wobei es dem Teilnehmer mit jedem Endgerät gleich einfach sein sollte die Objekte, Datendienste und/oder mobilen Anwendungen zu nutzen.
Ziel der Mobilfunkbetreiber ist es deshalb den Teilnehmern eine mobilfunkbetreibereigene, ausgereifte und langlebige Plattform anbieten zu können, um die Teilnehmer langfristig an sich binden zu können.
So soll sichergestellt werden, dass Objekte und Anwendungen auch geräteübergreifend genutzt werden können. Gleichzeitig aber sollen Betreiber und Hersteller auf Basis dieser Plattform ihre Angebote differenzieren und den Kundenwünschen anpassen können. Es soll eine einheitliche Nutzung vieler verschiedener mobiler Geräte möglich sein. Die Plattform soll Anwendern eine einheitlichere, verbesserte Nutzungserfahrung vieler verschiedener Geräte bieten und den einzelnen Betreibern und Herstellern ermöglichen, ihre Angebote individuell nach Kundenwünschen zu gestalten.

Das Dokument SIEZEN S: "Symbian OS Version 8.0 product description", 1. Februar 2004 offenbart die Architektur des Symbian-Betriebssystems. Die Veröffentlichung TANENBAUM A. S.: "COMPUTER NETWORKS, CHAPTER 8 (NETWORK SECURITY)", 1. Januar 2003, PEARSON EDUCATION INTERNATIONAL, UPPER SADDLE RIVER, NJ, Seiten 772 - 776, ISBN: 978-0-13-038488-1 betrifft die Verschlüsselung und Integritätsprüfung der Datenübertragung zwischen einem Quellprozess und einem Zielprozess. Aufgabe der vorliegenden Erfindung ist es ein Verfahren zur anwendungsübergreifenden Verwendung von Objekten auf einem Terminal-Ebene-Modell in einem elektronischen Endgerät, ein Terminal-Ebenen-Modell zur anwendungsübergreifenden Verwendung von Objekten auf einem elektronischen Endgerät sowie ein elektronisches Endgerät zur anwendungsübergreifenden Verwendung von Objekten zu schaffen, durch die die Benutzung und Darstellung von Objekten und Anwendungen erheblich erleichtert wird. Insbesondere soll dem Nutzer eines elektronischen Endgerätes eine einheitliche und vereinfachte Bedienung und Darstellung von Objekten und Anwendungen auf einer Benutzer-Schnittstelle ermöglicht werden.
Die Aufgabe wird erfindungsgemäß durch ein Verfahren zur anwendungsübergreifenden Verwendung von Objekten in einem elektronischen Endgerät gemäß Patentanspruch 1, durch ein Terminal-Ebenen-Modell zur anwendungsübergreifenden Verwendung von Objekten auf einem elektronischen Endgerät gemäß Patentanspruch 11 sowie durch ein elektronisches Endgerät zur anwendungsübergreifenden Verwendung von Objekten gemäß Patentanspruch 17 gelöst. Weitere Ausgestaltungen der Erfindung ergeben sich aus den abhängigen Patentansprüchen, der Beschreibung sowie der Zeichnung. Merkmale und Details, die im Zusammenhang mit dem erfindungsgemäßen Verfahren zur anwendungsübergreifenden Verwendung von Objekten auf einem Terminal-Ebene-Modell in einem elektronischen Endgerät beschrieben sind, gelten dabei selbstverständlich, soweit anwendbar, auch im Zusammenhang mit dem erfindungsgemäßen Terminal-Ebenen-Modell zur anwendungsübergreifenden Verwendung von Objekten auf einem elektronischen Endgerät sowie dem elektronischen Endgerät zur anwendungsübergreifenden Verwendung von Objekten und jeweils umgekehrt.
Die Aufgabe wird gemäß des ersten Aspektes der Erfindung durch ein Verfahren zur anwendungsübergreifenden Verwendung von Objekten auf einem Terminal-Ebene-Modell in einem elektronischen Endgerät, bei dem nach dem Empfang der Objekte durch das elektronische Endgerät, in einer Objekt-Ebene die Objekte verwaltet werden und über wenigstens eine Anwendungs-Schnittstelle einer Anwendungs-Ebene, die zumindest eine Anwendung/Applikation aufweist, verfügbar gemacht werden, bei dem in der Anwendungs-Ebene die Objekte anwendungsspezifisch verarbeitet werden, wobei die Anwendungs-Ebene über wenigstens eine Objekt-Schnittstelle mit der Objekt-Ebene kommuniziert und über wenigstens eine Darstellungs-Schnittstelle mit einer Darstellungs-Ebene kommuniziert, bei dem in der Darstellungs-Ebene, die wenigstens eine Hardware-Schnittstelle zu einer Anzeige-/Eingabeeinrichtung aufweist, die Objekte für einen Betrachter wahrnehmbar gemacht werden, wobei die Darstellungs-Ebene über wenigstens eine weitere Schnittstelle mit der Anwendungs-Ebene kommuniziert, und bei dem in der Anzeigeeinrichtung die Objekte über wenigstens eine Schnittstelle dem Betrachter angezeigt bzw. bei dem mittels der Eingabeeinrichtung die Objekte über wenigstens eine Schnittstelle dem Betrachter manipulierbar gemacht werden, gelöst. Ein Objekt im Lichte der vorliegenden Erfindung beschreibt die individuelle Ausprägung eines Objekttyps. Ein Objekt kann unter anderem eine SMS, eine MMS, eine Email oder beispielsweise eine IM-Konversation, ein Kontakt, ein Voice-Call, ein Video-Call, eine PTT-Konversation, ein Kalendertermin, ein Profil, ein Event, ein Wallpaper, ein Scrennsaver, ein Klingelton, eine Musikdatei, eine Nachricht, ein Bild, eine Textnachricht, ein Video, ein Spiel, ein komprimierter Sound, ein komprimiertes Video, ein Bookmark oder ein Push-Inhalt sein.

Die Objekt-Ebene ist für die Objekt-Verwaltung zuständig. D.h., die Objekt-Verwaltung dient zur anwendungsunabhängigen Speicherung, Aktualisierung, Löschung und dem Lesen und Weitergeben eines Objekts und spielt sich auf der Objekt-Ebene ab. Die Objekt-Verarbeitung dient einer anwendungsspezifischen Erstellung, Veränderung und/oder Löschung eines Objekts und spielt sich auf der Anwendungs-Ebene ab. Die Objekt-Darstellung/Interaktion dient der Wahrnehmbarmachung für den Benutzer und der Interaktion mit dem Benutzer und spielt sich auf der Darstellungs-Ebene, auch User-Interface-Ebene genannt, ab. D.h., die Darstellungs-Ebene enthält eine Logik zur Wahrnehmbarmachung und Beeinflussung der Objekte und Anwendungen.

Die Objekt-Ebene interagiert bei dem erfindungsgemäßen Verfahren mit der Anwendungs-Ebene, aber nicht direkt mit der Darstellungs-Ebene. Die Darstellungs-Ebene interagiert mit der Anwendungs-Ebene, aber nicht direkt mit der Objekt-Ebene. Hierdurch kann eine anwendungsübergreifende Verwendung von Objekten erreicht werden. Den Objekten wird durch das Verfahren in der Objekt-Ebene eine einheitliche Beschreibungsstruktur, unabhängig vom Träger, Objekttyp, Inhalt, Ursprung, Verwendungszweck etc. zugeordnet. Nach dieser Zuordnung werden die einheitlichen Objekte in der Objekt-Ebene verwaltet. D.h., die verschiedenen Objekte werden zu Unified Terminal Objects, kurz UTOs. Die Beschreibungsstruktur der Unified Terminal Objects besteht aus Objekt-Parametern, die sich in Parameter-Gruppen unterteilen lassen. Die Objekt-Parameter definieren die einheitliche Beschreibung der Unified Terminal Objects und ihrer Verwendungsweise. Es lassen sich drei Klassen von Objekt-Parametern, nämlich Identifikations-Parameter, Inhalts-Parameter und Nutzungs-Parameter, unterscheiden, die unabhängig voneinander definiert sind und genutzt werden können.

Der Zweck von "Identifikations-Parametern" ist die Objekt-Verwaltung des Objekts zu unterstützen. So kann ein Objekt folgende Identifikations-Parameter aufweisen: Objekt-ID, Objekt-Erzeuger, Objekt-Eigentümer, Objekt-Editor, Objekt-Erzeugungsdatum, Objekt-Empfangsdatum, Objekt-Sender, Objekttyp, Objekt-Empfänger, Objekt-Sendedatum.

Der Zweck von "Inhalts-Parametern" ist die Inhalte der Objekte aus Benutzersicht zu definieren. Die Daten der Inhalts-Parameter werden grundsätzlich verwendet um sie auf dem Display von Terminals darzustellen. Die einzelnen Inhalts-Parameter sind: Titel, Beschreibung, Liste von Schlüsselwörtern, Liste von Inhalts-Objekten. Jedes Inhalts-Objekt ist spezifiziert durch den Namen, das Medienobjekt (z.B. Text, Bild, Video etc.) und durch eine Netzwerkadresse.

Der Zweck der Nutzungs-Parameter ist zu definieren, wie Objekte genutzt werden können. Die einzelnen Nutzungs-Parameter sind: DRM Information, Objekt-Zustand (full, trial), Benutzungs-Kontrolle (lesen, schreiben, löschen), Trigger (Gebrauchsstart, Gebrauchszeit, Gültigkeitsdatum).

Bei dem erfindungsgemäßen Verfahren werden Objekte von der Anwendungs-Ebene zu der Objekt-Ebene weitergeleitet und umgekehrt. Hierzu weist die Anwendungs-Ebene wenigstens eine Objekt-Schnittstelle und die Objekt-Ebene wenigstens eine Darstellungs-Schnittstelle auf. Zur Weiterleitung der Objekte von der Anwendungs-Ebene zur Darstellungs-Ebene weist die Anwendungs-Ebene wenigstens eine Darstellungs-Schnittstelle auf. Zur Weiterleitung der Objekte von der Darstellungs-Ebene zur Anwendungs-Ebene weist die Darstellungs-Ebene wenigstens eine Anwendungs-Schnittstelle auf. Jede Anwendung/Applikation der Anwendungs-Ebene weist eine Objekt-Schnittstelle zu der Objekt-Ebene auf, über die Objekte zu der jeweils anderen Ebene weitergeleitet werden können. Die Darstellungs-Ebene kommuniziert über eine Hardware-Schnittstelle mit der Anzeige-/Eingabeeinrichtung des elektronischen Endgerätes, um die Objekte für einen Betrachter wahrnehmbar zu machen. Die Anzeige-/Eingabeeinrichtung weist eine Darstellungs-Schnittstelle auf, um die Objekte dem Betrachter manipulierbar zu machten. Durch diese Vielzahl von Schnittstellen können die empfangenen oder bereits gespeicherten Objekte von einer Ebene zur anderen Ebene übergeben werden, wobei jede Ebene eine unterschiedliche Aufgabe hat.

Durch das erfindungsgemäße Verfahren wird die Benutzung und Darstellung von Objekten und Anwendungen auf einem elektronischen Endgerät erheblich erleichtert. Insbesondere werden dem Nutzer eines elektronischen Endgerätes eine einheitliche und vereinfachte Bedienung und Darstellung von Objekten und Anwendungen auf einer Benutzer-Schnittstelle ermöglicht. In der Objekt-Ebene werden die empfangenen Objekte normiert, so dass sie anwendungsunabhängig von den verschiedenen Anwendungen der Anwendungs-Ebene genutzt werden können.

Vorteilhaft ist ein Verfahren, bei dem in der Anwendungs-Ebene Objekte durch eine Anwendung/Applikation, insbesondere einen Eingehende-Objekt-Manager, empfangen und geprüft werden. Der Eingehende-Objekt-Manager stellt die Schnittstelle zu Objekten dar, die das Terminal empfängt. Er hat zur Aufgabe, eingehende Objekte im Hinblick auf Sicherheit, Kompatibilität, Erlaubnis, Verschlüsselung, Viren etc. zu prüfen. Der Eingehende-Objekt-Manager weist bevorzugt eine Speichereinrichtung auf zur Zwischenspeicherung der empfangenen Objekte.

Ferner ist ein Verfahren vorteilhaft, bei dem die Objekte nach der Prüfung durch ein Anwendung/Applikation, insbesondere durch den Eingehende-Objekt-Manager, an die Objekt-Ebene übergeben werden und in der Objekt-Ebene die Objekte anwendungsunabhängig gespeichert, aktualisiert, gelöscht, gelesen und/oder weitergeleitet werden. D.h., passieren eingehende Objekte die Prüfung, übergibt der Eingehende-Objekt-Manager diese Objekte an die Objekt-Ebene, die die Objekte verwaltet.

Bevorzugt ist ferner, wenn in der Objekt-Ebene die Objekte durch einen Objekt-Manager anwendungsunabhängig aktualisiert, gelöscht, identifiziert, gelesen und/oder weitergeleitet werden und die Objekte in einer Objekt-Library gespeichert werden, wobei die Kommunikation zwischen dem Objekt-Manager und der Objekt-Library über eine Objekt-Schnittstelle erfolgt. Auf der Objekt-Ebene befinden sich die Objekt-Library mit den gespeicherten Objekten und der Objekt-Manager. Die Aufgabe des Objekt-Managers besteht darin, die Objekte anwendungsunabhängig zu verwalteten. D.h. der Objekt-Manager bildet die Schnittstelle zwischen den Objekten in der Objekt-Ebene und den Anwendungen auf der Anwendungs-Ebene. Die Objekte haben eine einheitliche Beschreibungsstruktur, was das Unified Terminal Objekts ausmacht. Die Objekte sind prinzipiell unabhängig vom Träger, Objekttyp, Inhalt, Ursprung, Verwendungszweck etc.

Bevorzugt ist ferner, wenn der Objekt-Manager nach dem Lesen eines Objektes und dem Weiterleiten des Objektes zu der Objekt-Library in einer Objekt-Referenzliste die Kennung des Objektes speichert und in einer Objekttyp-Anwendungsliste vermerkt durch welche Anwendung/Applikation in der Anwendungs-Ebene das Objekt verarbeitet werden kann. D.h., zur Verwaltung der Objekte steht dem Objekt-Manager eine Objekt Referenzliste zur Verfügung. In dieser Liste sind alle in der Objekt-Library gespeicherten Objekte eingetragen. Zudem verfügt der Objekt-Manager über eine Objekttyp-Anwendungsliste. Diese Liste enthält für jeden Objekttypen eine oder mehrere zugeordnete Applikationen, die die Objekte verarbeiten können. Wenn einem Objekttyp mehrere Applikationen zugeordnet sind, wird eine der genannten Applikationen als Default-Applikation gekennzeichnet. Bei dem Verfahren ist des Weiteren vorteilhaft, wenn in der Anwendungs-Ebene die Objekte durch verschiedene Anwendungen/Applikationen anwendungsspezifisch erstellt, verändert und/oder gelöscht werden. Die Anwendungen/Applikationen können verschiedenartig sein. So können die Anwendungen/Applikationen servicebezogene Anwendungen/Applikationen, wie z.B. Anruf-Anwendungen (Sprach-Anruf, Video-Anruf, Push-to-Talk), Nachrichten-Anwendungen (SMS, MMS, Email, IM), Unterhaltungs-Anwendungen (Music (offline), Music (online), Radio, TV, Video (online), Video (offline), Spiele (offline), Spiele (online)), Organisations-Anwendungen (Telefonbuch, Kalender, Synchronisation, BlueTooth, Infrarot) und weitere typische und nicht genannte Anwendungen sein.

Bevorzugt kommunizieren in der Anwendungs-Ebene die Anwendungen/Applikationen über wenigstens eine Objekt-Schnittstelle mit einem Objekt-Manager der Objekt-Ebene. Hierbei fordern die Anwendungen/Applikationen, insbesondere ein Meldungs-Manager, vom Objekt-Manager Objekte an und der Objekt-Manager übergibt nach der Anforderung die Objekte an die Anwendungen/Applikationen, insbesondere den Meldungs-Manager, zur Bearbeitung. D.h., der Meldungs-Manager hat zur Aufgabe, den Benutzer über eingegangene Objekte zu informieren und zu ermöglichen, dass der Benutzer mit einem eingegangenen Objekt interagieren kann. Nachdem ein Objekt eingegangen und vom Eingehende-Objekt-Manager an den Objekt-Manager übergeben wurde, identifiziert der Objekt-Manager den Objekttyp und informiert eine so genannte Standard-Anwendung. Hierzu liest der Objekt-Manager aus der Objekttyp-Anwendungsliste die zum Objekttyp genannte Standard-Anwendung aus. Die Standard-Anwendung entscheidet, was mit dem Objekt passiert. Ein möglicher Fall ist, dass die Standard-Anwendung den Meldungs-Manager informiert, für das eingegangene Objekt eine Meldung anzuzeigen. Die Anwendung übergibt an den Meldungs-Manager die vom Objekt-Manager erhaltene Objekt-Referenz und den Objekttyp. Alternative hierzu wird an den Meldungs-Manager nur die Objekt-Referenz übergeben und der Meldungs-Manager fordert vom Objekt-Manager dann den Objekttyp an.

Vorteilhaft ist ferner ein Verfahren, bei dem in der Anwendungs-Ebene die Anwendungen/Applikationen über die wenigstens eine Darstellungs-Schnittstelle mit einer Benutzer-Schnittstellen-Engine der Darstellungs-Ebene kommunizieren. So fordert der Meldungs-Manager von der Darstellungsebene-Ebene ein zum Objekttyp zugehöriges Benutzer-Schnittstellen-Element an, was sich in einer Objekttyp-Benutzer-Schnittstellen-Elementliste in der Darstellungs-Ebene befindet. Der Meldungs-Manager fordert von der Darstellungs-Ebene an, welche Inhalte für dieses Benutzer-Schnittstellen-Element benötigt werden und zu welchen Objekttypen die Inhalte gehören. Diese Information befindet sich in der Benutzer-Schnittstellen-Element-Inhaltsliste in der Darstellungs-Ebene. Der Meldungsmanager kann für jeden fehlenden Inhalt und zugehörigen Objekttypen erfragen, welche Anwendung hierfür zuständig ist. Hierzu fordert der Meldungsmanager vom Objekt-Manager die zugehörige Standard-Anwendung an, die sich in der Objekttyp-Anwendungsliste der Objekt-Ebene befindet. Ferner fordert der Meldungsmanager von den zuständigen Anwendungen/Applikationen die fehlenden Inhalte an, diese über den Objekt-Manager zu erhalten. Die Anwendungen/Applikationen übergeben die geforderten Inhalte an den Meldungs-Manager. Der Meldungs-Manager übergibt an die Darstellungs-Ebene die Referenz auf das Benutzer-Schnittstellen-Element, die Objekt-Referenz und die benötigten Inhalte.

Besonders bevorzugt ist ein Verfahrensschritt, bei dem die Anwendungen/Applikationen die Benutzer-Schnittstellen-Engine der Darstellungs-Ebene anweisen, welches anwendungs-/applikationsspezifische und/oder objektspezifische Benutzer-Schnittstellen-Element für die Wahrnehmbarmachung und/oder Manipulation von Objekten benötigt werden. Die Benutzer-Schnittstellen-Engine erhält von Anwendungen/Applikationen Anweisungen, welche Benutzer-Schnittstellen-Elemente benötigt werden. Hierbei interagieren die Anwendung über die Darstellungs-Schnittstelle der Anwendungs-Ebene und die Benutzer-Schnittstellen-Engine über die Anwendungs- Schnittstelle der Darstellungs-Ebene. Welche applikationsspezifische und objektspezifische Darstellung ausgewählt werden soll, teilt die entsprechende Anwendung der Darstellungs-Ebene mit. In der Darstellungs-Ebene wählt dann die Benutzer-Schnittstellen-Engine über die Library-Schnittstelle die benötigten Elemente aus der Benutzer-Schnittstellen-Library der Darstellungs-Ebene aus.

Bevorzugt ist ferner ein Verfahren, bei dem die Benutzer-Schnittstellen-Engine über eine Library-Schnittstelle mit einer Benutzer-Schnittstellen-Library und die Benutzer-Schnittstellen-Library über eine Benutzer-Schnittstellen-Engine-Schnittstelle mit der Benutzer-Schnittstellen-Engine kommuniziert, um die bestimmten Benutzer-Schnittstellen-Elemente, die zur Wahrnehmbarmachung und/oder Manipulation eines oder mehrere Objekte(s) benötigt werden, auszuwählen bzw. weiterzuleiten.

Bevorzugt leitet in der Darstellungs-Ebene die Benutzer-Schnittstellen-Engine die Objekte über die Hardware-Schnittstelle zu einer Anzeige-/Eingabeeinrichtung weiter, um die Objekte für einen Betrachter wahrnehmbar zu machen. Die Anzeige-/Eingabeeinrichtung kann beispielsweise ein Display des elektronischen Endgerätes sein.

Ferner ist ein Verfahren bevorzugt anwendbar, bei dem die Benutzer-Schnittstellen-Library über eine Benutzer-Schnittstellen-Wartungs-Schnittstelle gewartet wird. D.h., die Benutzer-Schnittstellen-Elemente sind nicht in der Benutzer-Schnittstellen-Engine gespeichert, sondern in der Benutzer-Schnittstellen-Library, so dass sie von Außen wartbar sind. So ist es möglich die Benutzer-Schnittstellen-Library zu ergänzen. Es können über die Benutzer-Schnittstellen-Wartungs-Schnittstelle Themen oder Vorlagen in die Benutzer-Schnittstellen-Library gewartet bzw. neu aufgespielt werden. Ferner können die Listen der Benutzer-Schnittstellen-Library, d.h. die Objekttyp- Benutzer-Schnittstellen-Listen oder die Benutzer-Schnittstellen-Element-Liste geändert werden, ohne die Benutzer-Schnittstellen-Engine zu ändern.

Bevorzugt tauschen bei dem Verfahren die Anwendungen/Applikationen Objekte untereinander aus.

Gemäß einem zweiten Aspekt der Erfindung wird die Aufgabe durch ein Terminal-Ebenen-Modell zur anwendungsübergreifenden Verwendung von Objekten auf einem elektronischen Endgerät, aufweisend eine Objekt-Ebene zur Verwaltung von Objekten, eine Anwendungs-Ebene zur anwendungsspezifischen Verarbeitung von Objekten und eine Darstellungs-Ebene zur Wahrnehmbarmachung und Manipulierung der Objekte, wobei die Objekt-Ebene wenigstens eine Anwendungs-Schnittstelle zur Anwendungs-Ebene, die Anwendungs-Ebene wenigstens eine Objekt-Schnittstelle zur Objekt-Ebene und wenigstens eine Darstellungs-Schnittstelle zur Darstellungs-Ebene und die Darstellungs-Ebene wenigstens eine Anwendungs-Schnittstelle zur Anwendungs-Ebene und wenigstens eine Hardware-Schnittstelle zu einer Anzeige-/Eingabeeinrichtung aufweist, gelöst. Durch ein derartiges Terminal-Ebenen-Modell kann das zuvor beschriebene Verfahren durchgeführt werden. Das erfindungsgemäße Terminal-Ebenen-Modell erleichtert die Benutzung und Darstellung von Objekten und Anwendungen auf einem elektronischen Endgerät erheblich. Insbesondere werden dem Nutzer eines elektronischen Endgerätes durch das Terminal-Ebenen-Modell eine einheitliche und vereinfachte Bedienung und Darstellung von Objekten und Anwendungen auf einer Benutzer-Schnittstelle ermöglicht.

Das Terminal-Ebenen-Modell weist in der Objekt-Ebene wenigstens eine Speichereinrichtung, in der Anwendungs-Ebene wenigstens eine Speichereinrichtung und in der Darstellungs-Ebene wenigstens eine Speichereinrichtung auf, um die empfangenen Objekte und die bereits gespeicherten Objekte in jeder Ebene zu bearbeiten.

Bevorzugt ist dabei ein Terminal-Ebenen-Modell, das eine Anzeige-/Eingabeeinrichtung aufweist, wobei die Anzeige-/Eingabeeinrichtung wenigstens eine Darstellungs-Schnittstelle zur Darstellungs-Ebene aufweist. Dies ermöglicht einem Nutzer des elektronischen Endgeräts die Objekte, die Anwendungen oder sonstige Informationen von Außen manipulierbar zu machen.

Bei dem Terminal-Ebenen-Modell ist in der Objekt-Ebene bevorzugt ein Objekt-Manager vorgesehen ist, der über die wenigstens eine Anwendungs-Schnittstelle mit der Anwendungs-Ebene kommuniziert, und in der Objekt-Ebene ist ferner eine Objekt-Bibliothek zur Speicherung der Objekte vorgesehen, wobei der Objekt-Manager über wenigstens eine Objekt-Schnittstelle mit der Objekt-Bibliothek kommuniziert. Der Objekt-Manager speichert nach dem Lesen eines Objektes und dem Weiterleiten des Objektes zu der Objekt-Library in einer Objekt-Referenzliste die Kennung des Objektes und vermerkt in einer Objekttyp-Anwendungsliste durch welche Anwendung/Applikation in der Anwendungs-Ebene das Objekt verarbeitet werden kann. Zur Verwaltung der Objekte steht dem Objekt-Manager eine Objekt Referenzliste zur Verfügung. In dieser Liste sind alle in der Objekt-Library gespeicherten Objekte eingetragen. Zudem verfügt der Objekt-Manager über eine Objekttyp-Anwendungsliste. Diese Liste enthält für jeden Objekttyp eine oder mehrere zugeordnete Applikationen, die die Objekte verarbeiten können. Wenn einem Objekttyp mehrere Applikationen zugeordnet sind, wird eine der genannten Applikationen als Default-Applikation gekennzeichnet.

Die Speichereinrichtung der Anwendungs-Ebene des Terminal-Ebenen-Modells ist bevorzugt zur Speicherung von servicebezogene Anwendungen/Applikationen ausgebildet ist.

Ferner ist ein Terminal-Ebenen-Modell vorteilhaft, bei dem die Darstellungs-Ebene wenigstens eine Schnittstellen-Engine und eine Schnittstellen-Bibliothek aufweist, wobei die Schnittstellen-Engine zur Kommunikation mit der Schnittstellen-Bibliothek eine Library-Schnittstelle und die Schnittstellen-Bibliothek zur Kommunikation mit der Schnittstellen-Engine eine Benutzer-Schnittstellen-Engine-Schnittstelle aufweist.

Hierdurch können die Anwendungen/Applikationen der Anwendungs-Ebene die Benutzer-Schnittstellen-Engine der Darstellungs-Ebene anweisen, welches anwendungs-/applikationsspezifische und/oder objektspezifische Benutzer-Schnittstellen-Element für die Wahrnehmbarmachung und/oder Manipulation von Objekten benötigt wird. Hierbei interagieren die Anwendung über die Darstellungs-Schnittstelle der Anwendungs-Ebene und die Benutzer-Schnittstellen-Engine über die Anwendungs- Schnittstelle der Darstellungs-Ebene. Welche applikationsspezifische und objektspezifische Darstellung ausgewählt werden soll, teilt die entsprechende Anwendung der Darstellungs-Ebene mit. In der Darstellungs-Ebene wählt dann die Benutzer-Schnittstellen-Engine über die Library-Schnittstelle die benötigten Elemente aus der Benutzer-Schnittstellen-Library der Darstellungs-Ebene aus. Die Benutzer-Schnittstellen-Engine kommuniziert über eine Library-Schnittstelle mit der Benutzer-Schnittstellen-Library und die Benutzer-Schnittstellen-Library über eine Benutzer-Schnittstellen-Engine-Schnittstelle mit der Benutzer-Schnittstellen-Engine, um die bestimmten Benutzer-Schnittstellen-Elemente, die zur Wahrnehmbarmachung und/oder Manipulation eines oder mehrere Objekte(s) benötigt werden, auszuwählen bzw. weiterzuleiten.

Ein Terminal-Ebenen-Modell, bei dem die Benutzer-Schnittstellen-Library eine Benutzer-Schnittstellen-Wartungs-Schnittstelle aufweist, hat den Vorteil, dass die Benutzer-Schnittstellen-Library über die Benutzer-Schnittstellen-Wartungs-Schnittstelle gewartet werden kann. So ist es möglich über die Benutzer-Schnittstellen-Wartungs-Schnittstelle die Benutzer-Schnittstellen-Library zu ergänzen. Es können über die Benutzer-Schnittstellen-Wartungs-Schnittstelle Themen oder Vorlagen in die Benutzer-Schnittstellen-Library gewartet bzw. neu aufgespielt werden. Ferner können über die Benutzer-Schnittstellen-Wartungs-Schnittstelle die Listen der Benutzer-Schnittstellen-Library, d.h. die Objekttyp-Benutzer-Schnittstellen-Listen oder die Benutzer-Schnittstellen-Element-Liste geändert werden, ohne die Benutzer-Schnittstellen-Engine zu ändern.

Vorteilhaft ist ferner ein Terminal-Ebenen-Modell, bei dem die servicebezogene Anwendungen/Applikationen ein Anwendungsmanager, ein Eingehende-Objekt-Manager, ein Meldungs-Manager, ein Ausgehende-Objekt-Manager und ein Tagebuch-Manager sind. Alle Anwendungen/Applikationen weisen bevorzugt Speichereinrichtungen und Mittel zum Empfangen und Übergeben von Objekten auf. So können aus den aufgezeichneten Daten des Tagebuchmanagers Vorhersagen zum Benutzer-Verhalten gemacht werden. Diese Vorhersagen können dem dann Benutzer pro-aktiv angeboten werden. Wenn der Benutzer beispielsweise montags bis freitags jeweils um 18:00 die Sportnachrichten öffnet, können dem Benutzer die Sport-Nachrichten nach der dritten Benutzung gemäß dies Nutzerverhaltens automatisch angeboten werden. Es werden im Tagebuchmanager über das Verhalten des Nutzers Rückschlüsse gezogen, um pro-aktiv dem Nutzer Angebote zu unterbreiten.

Bevorzugt weist das Terminal-Ebenen-Modell Mittel zur Durchführung des zuvor geschilderten erfindungsgemäßen Verfahrens auf.

Gemäß des dritten Aspekte der Erfindung wird die Aufgabe durch ein elektronisches Endgerät zur anwendungsübergreifenden Verwendung von Objekten gelöst, wobei elektronische Endgerät ein zuvor beschriebenen erfindungsgemäßes Terminal-Ebenen-Modell aufweist. Das elektronische Endgerät stellt bevorzugt ein funkbasiertes Endgerät dar, Das elektronische Endgerät kann beispielsweise ein Laptops, ein PDA, ein Smartphone oder ein Mobiletelefon sein. Das elektronische Endgerät ist ausgebildet zu Durchführung des zuvor geschilderten Verfahrens. Das elektronische Endgerät weist vorteilhafterweise eine Vorrichtung zu Senden und Empfangen von Objekten auf. Hierdurch können auf das Terminal-Ebenen-Modell neu Objekte oder Anwendungen/Applikationen aufgespielt oder diese an ein anderes elektronisches Endgerät weitergeleitet werden.

Die Erfindung wird nun anhand von Aspekten unter Bezugnahme auf die beiliegenden Zeichnungen näher erläutert. Dabei zeigt:
- Figur 1:: ein erfindungsgemäßes Terminal-Ebenen-Modell,
- Figur 2:: ein weiteres erfindungsgemäßes Terminal-Ebenen-Modell.

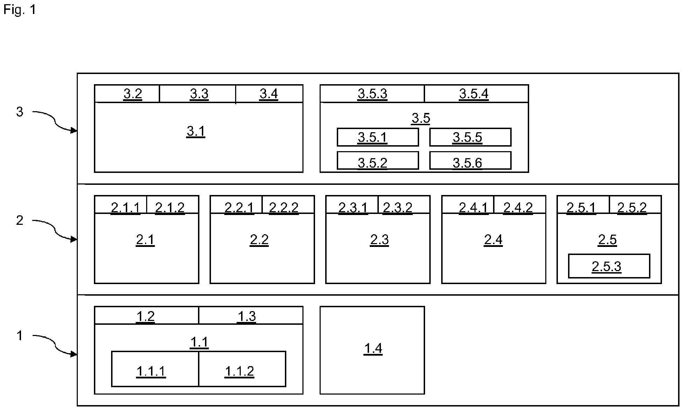

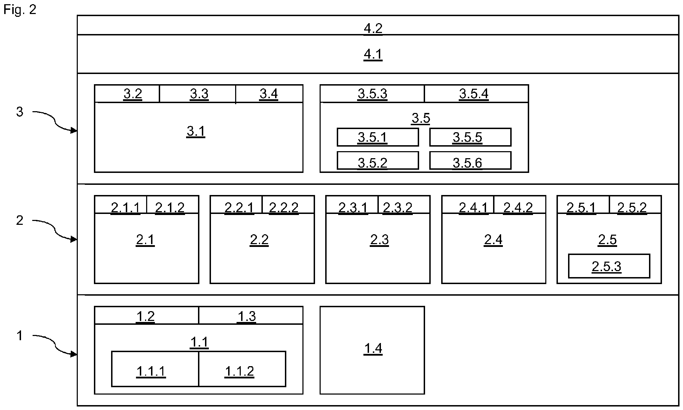

Fig. 1 zeigt ein erfindungsgemäßes Terminal-Ebenen-Modell. Fig. 2 zeigt das gleiche Terminal-Ebenen-Modell mit einer zusätzlich vorgesehenen Anzeige-/Eingabeeinrichtung 4.1. Das Terminal-Ebenen-Modell weist 3 Ebenen auf. Die Objekt-Ebene 1 ist für die Objekt-Verwaltung zuständig. Die Objekt-Verwaltung dient zur anwendungsunabhängigen Speicherung, Aktualisierung, Löschung und dem Lesen und Weitergeben eines Objekts und spielt sich auf der Objekt-Ebene 1 ab. Die Objekt-Verarbeitung dient einer anwendungsspezifischen Erstellung, Veränderung und/oder Löschung eines Objekts und spielt sich auf der Anwendungs-Ebene 2 ab. Die Objekt-Darstellung/Interaktion dient der Wahrnehmbarmachung für den Benutzer und der Interaktion mit dem Benutzer und spielt sich auf der Darstellungs-Ebene 3, auch User-Interface-Ebene genannt, ab. D.h., die Darstellungs-Ebene 3 enthält eine Logik zur Wahrnehmbarmachung und Beeinflussung der Objekte und Anwendungen Die Objekt-Ebene 1 interagiert bei dem erfindungsgemäßen Terminal-Ebenen-Modell bzw. dem erfindungsgemäßen Verfahren zur anwendungsübergreifenden Verwendung von Objekten auf dem Terminal-Ebene-Modell mit der Anwendungs-Ebene 2, aber nicht direkt mit der Darstellungs-Ebene 3. Die Darstellungs-Ebene 3 interagiert mit der Anwendungs-Ebene 2, aber nicht direkt mit der Objekt-Ebene 1. Hierdurch kann eine anwendungsübergreifende Verwendung von Objekten erreicht werden. Den Objekten wird durch das Verfahren in der Objekt-Ebene 1 eine einheitliche Beschreibungsstruktur, unabhängig vom Träger, Objekttyp, Inhalt, Ursprung, Verwendungszweck etc. zugeordnet. D.h. die von der Anwendungs-Ebene 2 empfangenen und an die Objekt-Ebene 1 weitergeleiteten Objekte werden in der Objekt-Ebene 1 normiert. Hierzu können die Objekte in der Objekt-Ebene 1 in vordefinierte Typen und/oder Parameter umgewandelt werden.
Nach der Normierung/Zuordnung werden die einheitlichen Objekte, d.h. die Unified Terminal Objects, in der Objekt-Ebene 1 verwaltet. Die Beschreibungsstruktur der Unified Terminal Objects besteht aus Objekt-Parametern, die sich in Parameter-Gruppen unterteilen lassen. Die Objekt-Parameter definieren die einheitliche Beschreibung der Unified Terminal Objects und ihrer Verwendungsweise. Hierbei lassen sich drei Klassen von Objekt-Parametern, nämlich Identifikations-Parameter, Inhalts-Parameter und Nutzungs-Parameter, unterscheiden, die unabhängig voneinander definiert sind und genutzt werden können.

Die Ebenen sind über Schnittstellen zum Austausch von Daten, insbesondere den Objekten bzw. den Unified Terminal Objects, miteinander verbunden. Die Objekte werden von der Anwendungs-Ebene 2 zu der Objekt-Ebene 1 weitergeleitet und umgekehrt. Hierzu weist die Anwendungs-Ebene 2 wenigstens eine Objekt-Schnittstelle 2.1.1. und die Objekt-Ebene 1 wenigstens eine Darstellungs-Schnittstelle 1.2 auf. Zur Weiterleitung der Objekte von der Anwendungs-Ebene 2 zur Darstellungs-Ebene 3 weist die Anwendungs-Ebene 2 wenigstens eine Darstellungs-Schnittstelle 2.1.2, 2.2.2, 2.3.2, 2.4.2, 2.5.2 auf. Zur Weiterleitung der Objekte von der Darstellungs-Ebene 3 zur Anwendungs-Ebene 2 weist die Darstellungs-Ebene 3 wenigstens eine Anwendungs-Schnittstelle 3.2 auf. In der Anwendungs-Ebene 2 sind verschiedene Anwendungen/Applikationen 2.1, 2.2, 2.3, 2.4, 2.5 gespeichert. Jede Anwendung/Applikation 2.1, 2.2, 2.3, 2.4, 2.5 der Anwendungs-Ebene 2 weist wenigstens eine Objekt-Schnittstelle 2.1.1, 2.2.1, 2.3.1, 2.4.1, 2.5.1 zu der Objekt-Ebene 1 auf, über die Objekte zu der Objekt-Ebene 1 weitergeleitet werden können. Die Darstellungs-Ebene 3 kommuniziert über eine Hardware-Schnittstelle 3.3 mit einer Anzeige-/Eingabeeinrichtung 4.1 des nicht dargestellten elektronischen Endgerätes, um die Objekte für einen Betrachter wahrnehmbar zu machen. Die Anzeige-/Eingabeeinrichtung 4.1 weist eine Darstellungs-Schnittstelle 4.2 auf, um die Objekte dem Betrachter manipulierbar zu machten. Durch diese Vielzahl von Schnittstellen können die empfangenen oder bereits gespeicherten Objekte von einer Ebene zur anderen Ebene übergeben werden, wobei jede Ebene eine unterschiedliche Aufgabe hat. Die in der Objekt-Ebene 1 normierten und verwalteten Unified Terminal Objects werden den verschiedenen Anwendungen 2.1, 2.2, 2.3, 2.4, 2.5 der Anwendungs-Ebene 2 übergeben, wenn diese Objekte anfordern.

Die Objekt-Ebene 1 verfügt über einen Objekt-Manager 1.1 durch den die Objekte anwendungsunabhängig aktualisiert, gelöscht, identifiziert, gelesen und/oder weitergeleitet werden. Der Objekt-Manager 1.1 normiert die neu eingehenden Objekte zu Unified Terminal Objects und leitet diese über ein Objekt-Schnittstelle 1.3 an die Objekt-Library 1.4 weiter, die die normierten Unified Terminal Objects speichert.

Der Objekt-Manager 1.1 bildet die Schnittstelle zwischen den Unified Terminal Objects in der Objekt-Ebene 1 und den Anwendungen 2.1, 2.2, 2.3, 2.4, 2.5 auf der Anwendungs-Ebene 2. Die Unified Terminal Objects haben eine einheitliche Beschreibungsstruktur, was das Unified Terminal Objects ausmacht. Die in der Objekt-Ebene 1 normierten und gespeicherten Unified Terminal Objects sind prinzipiell unabhängig vom Träger, Objekttyp, Inhalt, Ursprung, Verwendungszweck und können von deshalb von jeder Anwendungen 2.1, 2.2, 2.3, 2.4, 2.5 angefordert werden.

Der Objekt-Manager 1.1 speichert nach dem Lesen und Normieren eines Objektes und dem Weiterleiten des normierten Objektes zu der Objekt-Library 1.4 in einer Objekt-Referenzliste 1.1.1 die Kennung des Objektes und vermerkt in einer Objekttyp-Anwendungsliste 1.1.2 durch welche Anwendung/Applikation 2.1, 2.2, 2.3, 2.4, 2.5 in der Anwendungs-Ebene 2 das normierte Objekt, das Unified Terminal Object, verarbeitet werden kann. D.h., zur Verwaltung der Objekte steht dem Objekt-Manager 1.1 eine Objekt-Referenzliste 1.1.1 zur Verfügung. In dieser Liste sind alle in der Objekt-Library 1.4 gespeicherten Objekte eingetragen. Die Objekttyp-Anwendungsliste 1.1.2 enthält für jeden Objekttypen eine oder mehrere zugeordnete Applikationen 2.1, 2.2, 2.3, 2.4, 2.5, die die Objekte verarbeiten können. Die Anwendungen/Applikationen 2.1, 2.2, 2.3, 2.4, 2.5 der Anwendungs-Ebene 2 können verschiedenartig sein. So können die Anwendungen/Applikationen 2.1, 2.2, 2.3, 2.4, 2.5 servicebezogene Anwendungen/Applikationen, wie z.B. Anruf-Anwendungen, Nachrichten-Anwendungen, Unterhaltungs-Anwendungen oder Organisations-Anwendungen sein.

Die Anwendungen/Applikationen 2.1, 2.2, 2.3, 2.4, 2.5 in der Anwendungs-Ebene 2 kommunizieren über wenigstens eine Objekt-Schnittstelle 2.1.1, 2.2.1, 2.3.1, 2.4.1, 2.5.1 mit dem Objekt-Manager 1.1 der Objekt-Ebene 1. Hierbei fordern die Anwendungen/Applikationen 2.1, 2.2, 2.3, 2.4, 2.5, insbesondere ein Meldungs-Manager 2.3, vom Objekt-Manager 1.1 Objekte an und der Objekt-Manager 1.1 übergibt nach der Anforderung die Objekte an die Anwendungen/Applikationen 2.1, 2.2, 2.3, 2.4, 2.5, insbesondere den Meldungs-Manager 2.3, zur Bearbeitung. Der Meldungs-Manager 2.3 hat zur Aufgabe, den Benutzer über eingegangene Objekte zu informieren und zu ermöglichen, dass der Benutzer mit einem eingegangenen Objekt interagieren kann.

Neu von Außen eingehende Objekte werden von dem Eingehende-Objekt-Manager 2.2 empfangen und an den Objekt-Manager 1.1 weitergeleitet zur Verwaltung. Sollen Objekte an andere elektronische Endgeräte gesendet werden, erfolgt dies über den Ausgehende-Objekt-Manager 2.4. Der Tagebuch-Manager 2.5 erhält vom Eingehende-Objekt-Manager 2.2 die Nachricht, dass ein Objekt eingegangen ist und speichert diese Nachricht zusammen mit weiteren Informationen, wie der Zeit, dem Ort usw.

Die Anwendungen/Applikationen 2.1, 2.2, 2.3, 2.4, 2.5 der Anwendungs-Ebene 2 kommunizieren über die wenigstens eine Darstellungs-Schnittstelle 2.1.2, 2.2.2, 2.3.2, 2.4.2, 2.5.2 mit einer Benutzer-Schnittstellen-Engine 3.1 der Darstellungs-Ebene 3. So fordert der Meldungs-Manager 2.3 von der Darstellungs-Ebene ein zum Objekttyp zugehöriges Benutzer-Schnittstellen-Element an, was sich in einer Objekttyp-Benutzer-Schnittstellen-Elementliste 3.5.5 in der Darstellungs-Ebene 3 befindet. Der Meldungs-Manager 2.3 fordert von der Darstellungs-Ebene 3 an, welche Inhalte für dieses Benutzer-Schnittstellen-Element benötigt werden und zu welchen Objekttypen die Inhalte gehören. Diese Information befindet sich in der Benutzer-Schnittstellen-Element-Inhaltsliste 3.5.6 in der Darstellungs-Ebene 3. In der Darstellungs-Ebene 3 wählt die Benutzer-Schnittstellen-Engine 3.1 über die Library-Schnittstelle 3.4 die benötigten Elemente aus der Benutzer-Schnittstellen-Library 3.5 der Darstellungs-Ebene 3 aus. Die Benutzer-Schnittstellen-Library 3.5 kommuniziert über eine Benutzer-Schnittstellen-Engine-Schnittstelle 3.5.3 mit der Benutzer-Schnittstellen-Engine 3.1, um die bestimmten Benutzer-Schnittstellen-Elemente, die zur Wahrnehmbarmachung und/oder Manipulation eines oder mehrere Objekte(s) benötigt werden, auszuwählen bzw. weiterzuleiten.

In der Darstellungs-Ebene 3 leitet die Benutzer-Schnittstellen-Engine 3.1 die Objekte über die Hardware-Schnittstelle 3.3 zu einer Anzeige-/Eingabeeinrichtung 4.1 weiter, um die Objekte für einen Betrachter wahrnehmbar zu machen. Die Anzeige-/Eingabeeinrichtung 4.1 kann beispielsweise ein Display des elektronischen Endgerätes sein. Die Anzeige-/Eingabeeinrichtung 4.1 weist eine Darstellungs-Schnittstelle 4.2 auf, durch die die Objekte und Anwendungen des Terminal-Ebenen-Modells für einen Nutzer manipulierbar/bearbeitbar sind.

Die Benutzer-Schnittstellen-Library 3.5 wird über eine Benutzer-Schnittstellen-Wartungs-Schnittstelle 3.5.4 gewartet wird.

Nachfolgend werden weitere mögliche Verfahrensschritte des erfindungsgemäßen Verfahrens zur anwendungsübergreifenden Verwendung von Objekten auf einem Terminal-Ebene-Modell in einem elektronischen Endgerät und Merkmale des erfindungsgemäßen Terminal-Ebene-Modell beschrieben.

Ein Objekttyp beschreibt eine verwendungsbezogene Gruppe von Objekten derselben Art, wie beispielsweise Kontakte, Bilder, Nachrichten.

Die Objekt-Verwaltung befindet sich auf der Objekt-Ebene 1und dient zum Lesen, Schreiben oder Löschen von Objekt-Instanzen aus der UTO Library 1.4 anwendungsunabhängig.

Das Terminal Ebenen-Modell beschreibt die Software-Terminal-Architektur Die Darstellungs-Ebene 3, d.h. die User-Interface-Ebene, enthält die Logik, Daten für den Benutzer wahrnehmbar und beeinflussbar zu machen.

### Prinzipien zu den UTOs und zur Ebenen-Architektur:

Die UTOs haben eine einheitliche Beschreibungsstruktur, unabhängig vom Träger, Objekttyp, Inhalt, Ursprung, Verwendungszweck etc. Die Beschreibungsstruktur besteht aus Objekt-Parametern, die sich in Parameter-Gruppen unterteilen lassen.

Es wird hier zwischen der Objekt-Verwaltung, der Objekt-Verarbeitung und der Objekt-Darstellung/Interaktion unterschieden. Die Objekt-Verwaltung dient lediglich zur anwendungsunabhängigen Speicherung, Aktualisierung, Löschung und dem Lesen und Weitergeben des Objekts und spielt sich auf der Objekt-Ebene 1 ab. Die Objekt-Verarbeitung dient einer anwendungsspezifischen Erstellung, Veränderung und/oder Löschung eines Objekts und spielt sich auf der Anwendungsebene 2 ab. Die Objekt-Darstellung/Interaktion dient der Wahrnehmbarmachung für den Benutzer und der Interaktion mit dem Benutzer und spielt sich auf der User-Interface-Ebene 3 ab. Die Objekt-Ebene 1 interagiert mit der Anwendungs-Ebene 2, aber nicht direkt mit der User Interface-Ebene 3. Die User Interface-Ebene 3 interagiert mit der Anwendungs-Ebene 2, aber nicht direkt mit der Objekt-Ebene 1.

Mehrere Anwendungen 2.1, 2.2, 2.3, 2.4, 2.5 können unabhängig voneinander dieselben Objekte verarbeiten, aber nicht gleichzeitig. Einzelne Anwendungen 2.1, 2.2, 2.3, 2.4, 2.5 auf der Anwendungs-Ebene 2 können einzelne und/oder alle Objekte verarbeiten.

In der Objekt-Ebene 1 befinden sich die Objekt-Library 1.4 mit den gespeicherten Objekten und der Objekt-Manager 1.1. Die Aufgabe des Objekt-Managers 1.1 besteht darin, die Objekte anwendungsunabhängig zu verwalteten. D.h. der Objekt-Manager 1.1 bildet die Schnittstelle zwischen den Objekten und den Anwendungen 2.1, 2.2, 2.3, 2.4, 2.5 auf der Anwendungs-Ebene 2. Die Objekte haben eine einheitliche Beschreibungsstruktur, was das Unified Terminal Objekt (UTO) ausmacht. Die Objekte sind prinzipiell unabhängig vom Träger, Objekttyp, Inhalt, Ursprung, Verwendungszweck etc. Ein Objekt, das gemäß den UTO Prinzipien aufgebaut ist, ist unabhängig von der Übertragungstechnologie zu sehen. Ein UTO kann per SMS, MMS, Broadcast zum Terminal gesendet werden. Zur Verwaltung der Objekte steht dem Objekt-Manager 1.1 eine Objekt Referenzliste 1.1.1 zur Verfügung. In dieser Liste sind alle in der Objekt-Library 1.4 gespeicherten Objekte eingetragen. Zudem verfügt der Objekt-Manager 1.1 über eine Objekttyp-Anwendungsliste 1.1.2. Diese Liste enthält für jeden Objekttypen (Parameter IP 1.8) eine oder mehrere zugeordnete Applikationen, die die Objekte verarbeiten können. Wenn einem Objekttyp mehrere Applikationen zugeordnet sind, ist eine der genannten Applikationen als Default-Applikation gekennzeichnet.

Auf der Anwendungs-Ebene 2 befinden sich die servicebezogenen Anwendungen 2.1, 2.2, 2.3, 2.4, 2.5 des Terminals. Jede Anwendung 2.1, 2.2, 2.3, 2.4, 2.5 hat eine Schnittstelle 2.1.1, 2.2.1, 2.3.1, 2.4.1, 2.5.1 zur Objekt-Ebene 1 und eine Schnittstelle 2.1.2, 2.2.2, 2.3.2, 2.4.2, 2.5.2 zur User Interface-Ebene 3. Über die Objekt-Schnittstellen 2.1.1, 2.2.1, 2.3.1, 2.4.1, 2.5.1 können die Applikationen 2.1, 2.2, 2.3, 2.4, 2.5 mit dem Objekt-Manager 1.1 kommunizieren, wozu der Objekt-Manager 1.1 1 die Anwendungs-Schnittstelle 1.2 verwendet. Zweck der Kommunikation ist es, einerseits der Applikation mitzuteilen, welche Objekte für eine Applikation zur Verfügung stehen und andererseits der Applikation den Zugriff auf die Objekte zu ermöglichen. In diesem Fall fordert eine Applikation vom Objekt-Manager 1.1 Objekte an und der Objekt-Manager 1.1 übergibt an die fordernde Anwendung die entsprechenden Objekt-Referenzen. Nach der Objekt-Verarbeitung werden die veränderten Objekt-Daten wieder an die Objekt-Ebene 1 zur Objekt-Verwaltung übergeben.

Auf der Anwendungs-Ebene 2 befinden sich alle service-bezogenen Applikationen 2.1, wie z.B. Anruf-Anwendungen (z.B. Sprach-Anruf, Video-Anruf, Push-to-Talk), Nachrichten-Anwendungen (z.B. SMS, MMS, Email, IM), Unterhaltungs-Anwendungen (z.B. Music (offline), Music (online), Radio, TV, Video (online), Video (offline), Spiele (offline), Spiele (online)), Organisations-Anwendungen (z.B. Telefonbuch, Kalender, Synchronisation, BlueTooth, Infrarot) und weitere typische und nicht genannte Anwendungen.

Daneben gibt es einige Anwendungen, die eine besondere Rolle spielen und hier nachfolgend beschrieben werden. Der Eingehende-Objekt-Manager 2.2 stellt die Schnittstelle zu Objekten dar, die das Terminal empfängt. Er hat zur Aufgabe, eingehende Objekte im Hinblick auf Sicherheit, Kompatibilität, Erlaubnis, Verschlüsselung, Viren etc. zu prüfen. Passieren eingehende Objekte die Prüfung, übergibt der Eingehende-Objekt-Manager 2.2 diese Objekte an den Objekt-Manager 1.1, der das Objekt verwaltet.

Eine zweite herausgehobene Applikation ist der Meldungs-Manager 2.3. Dieser hat zur Aufgabe, den Benutzer über eingegangene Objekte zu informieren und zu ermöglichen, dass der Benutzer mit einem eingegangenen Objekt interagieren kann. Nachdem ein Objekt eingegangen und vom Eingehende-Objekt-Manager 2.2 an den Objekt-Manager 1.1 übergeben wurde, identifiziert der Objekt-Manager 1.1 über den Objekttyp (IP 1.8) und informiert eine Standard-Anwendung. Hierzu liest der Objekt-Manager 1.1 aus der Objekttyp-Anwendungsliste 1.1.2 die zum Objekttyp genannte Standard-Anwendung aus. Die Standard-Anwendung entscheidet, was mit dem Objekt passiert. Ein möglicher Fall ist, dass die Standard-Anwendung den Meldungs-Manager 2.3 informiert, für das eingegangene Objekt eine Meldung anzuzeigen. Die Anwendung übergibt an den Meldungs-Manager 2.3 die vom Objekt-Manager 1.1 erhaltene Objekt-Referenz und den Objekttyp (Alternative: An den Meldungs-Manager 2.3 wird nur die Objekt-Referenz übergeben und der Meldungs-Manager 2.3 fordert vom Objekt-Manager 1.1 den Objekttypen). Der Meldungs-Manager 2.3 fordert von der Darstellungs-Ebene 3 das zum Objekttypen zugehörige Benutzer-Schnittstellen-Element an, was sich in der Objekttyp-Benutzer-Schnittstelle-Elementliste 3.5.5 befindet. Zudem fordert der Meldungs-Manager 2.3 von der Darstellungs-Ebene 3 an, welche Inhalte für dieses Benutzer-Schnittstellen-Element benötigt werden und zu welchen Objekttypen die Inhalte gehören. Diese Information befindet sich in der Benutzer-Schnittstellen-Element-Inhaltsliste 3.5.6. Der Meldungsmanager 2.3 kann nun für jeden fehlenden Inhalt und zugehörigen Objekttypen erfragen, welche Anwendung hierfür zuständig ist. Hierzu fordert der Meldungsmanager 2.3 vom Objekt-Manager 1.1 die zugehörige Standard-Anwendung an, die sich in der Objekttyp-Anwendungsliste 1.1.2 befindet. Nun fordert der Meldungsmanager 2.3 von den zuständigen Anwendungen die fehlenden Inhalte an, diese über den Objekt-Manager 1.1 zu erhalten. Die Anwendungen übergeben die geforderten Inhalte an den Meldungs-Manager 2.3. Der Meldungs-Manager 2.3 übergibt an die Darstellungs-Ebene 3 die Referenz auf das Benutzer-Schnittstellen-Element, die Objekt-Referenz und die benötigten Inhalte.

Die dritte herausgehobene Anwendung ist der Ausgehende-Objekt-Manager 2.4. Dieser ist dafür zuständig, die Objekte an andere Geräte zu senden. Wenn der Benutzer über eine Anwendung, z.B. eine Nachrichten-Erstellungs-Anwendung, ein Objekt versenden möchte, wird dieses an den Ausgehende-Objekt-Manager 2.4 übergeben. Hierbei wird davon ausgegangen, dass das Objekt und die Versendungs-Informationen vollständig sind. Der Ausgehende-Objekt-Manager 2.4 initiiert die Versendung, indem er die Verbindung zu einem Netzwerk aufbaut und/oder die Verbindung zu einem anderen Gerät, z.B. via BlueTooth, aufbaut.

Die vierte herausgehobene Anwendung ist der Tagebuch-Manager 2.5. Die Aufgabe des Tagesbuch-Managers 2.5 ist es, definierte Aktionen auf einem Gerät zu dokumentieren. Um welche Aktionen es sich hierbei handelt, kann festgelegt werden. Die Dokumentation von Aktionen soll dazu dienen, für den Benutzer vergangene Aktionen einschließlich der involvierten Objekte auch nach der Aktion zugänglich zu machen. Weiterhin soll es möglich sein, aufgrund der Tagebuch-Aktionen Benutzerhandlungen zumindest teilweise vorhersagbar zu machen. Die Aktionen werden in der Tagebuchliste 2.5.3 eingetragen. Alternative zur Tagebuchliste 2.5.3 können die Daten auch im Objekt gespeichert werden. Hierzu würde eine vierte Parameterliste angelegt, die Tagebuchliste 2.5.3 in jedem Objekt speichern würde. In diesem Fall würde die Objekt-Referenz nicht gespeichert werden.

Auf der Darstellungs-Ebene 3 befinden sich die Benutzer-Schnittstellen-Engine 3.1 und die Benutzer-Schnittstellen-Library 3.5. Die Aufgabe der Darstellungs-Ebene 3 besteht darin, Objekte oder Teile der Objekte für den Benutzer wahrnehmbar zu machen, z.B. ein graphisches Element auf einem Screen anzeigen und Töne abzuspielen, und beeinflussbar zu machen. Hierzu verwendet die Benutzer-Schnittstellen-Engine 3.1 die Hardware-Schnittstelle 3.3. Über die Anwendungs-Schnittstelle 3.2 kommuniziert die Darstellungs-Ebene 3 mit der Anwendungs-Ebene 2. Über die Library-Schnittstelle 3.4 interagiert die Benutzer-Schnittstellen-Engine 3.1 mit der Benutzer-Schnittstellen-Library 3.5.

Die Aufgabe der Benutzer-Schnittstellen-Library 3.5 ist es, die Benutzer-Schnittstellen-Elemente vorzuhalten. Die Benutzer-Schnittstellen-Library 3.5 interagiert mit der Benutzer-Schnittstellen-Engine 3.1 über die Benutzer-Schnittstellen-Engine-Schnittstelle 3.5.3. Die Benutzer-Schnittstellen-Elemente sind nicht in der Benutzer-Schnittstellen-Engine 3.1 gespeichert, um sie von außen wartbar zu machen. So ist es möglich, andere Themes 3.5.1, Vorlagen 3.5.2 und die zugehörigen Listen 3.5.5 und 3.5.6 zu ändern, ohne die gesamte Benutzer-Schnittstellen-Engine 3.1 zu verändern. Hierzu wird die Benutzer-Schnittstellen-Wartungs-Schnittstelle 3.5.4 verwendet.

Die U Benutzer-Schnittstellen-Engine 3.1 erhält von Anwendungen 2.1 Anweisungen, welche Benutzer-Schnittstellen-Elemente benötigt werden. Hierbei interagiert die Anwendung 2.1 über die Benutzer-Schnittstellen-Schnittstelle 2.1.2 und die Benutzer-Schnittstellen-Engine 3.1 über die Anwendungs-Schnittstelle 3.2. Welche applikationsspezifische und objektspezifische Darstellung ausgewählt werden soll, teilt die Anwendung 2.1 der Darstellungs-Ebene 3 mit. In der Darstellungs-Ebene 3 wählt dann die Benutzer-Schnittstellen-Engine 3.1 über die Library-Schnittstelle 3.4 die benötigten Elemente aus der Benutzer-Schnittstellen-Library 3.5 aus. Über die Hardware-Schnittstelle 3.3 werden dann die Informationen für die Benutzer wahrnehmbar und manipulierbar gemacht.

Nachfolgend werden die relevanten Listen und die Inhaltstypen pro Spalte aufgeführt:
- Objekt-Referenzliste 1.1.1: Objekt-Referenz, Objekt-Instanz (oder Referenz auf Objekt-Instanz)
- Objekttyp-Anwendungsliste 1.1.2: Objekttyp, Liste von Anwendungen (Default-Anwendung hat besondere Auszeichnung, z.B. 1. Anwendung in der Liste)
- Tagebuchliste 2.5.3: Objekt-Referenz, Objekttyp, Aktionstyp (z.B. "Empfangen", "Gelesen", "Versendet"), von wem (z.B. SIM, IMEI), Benutzer (z.B. SIM, IMEI), benutzte Anwendung, wann (Zeit, Ort, Zeitzone), wo (Ortsinformation, z.B. Längen- und Breitengrad, Zelle), mit wem (z.B. SIM, IMEI)
- Objekttyp-Benutzer-Schnittstellen-Elementliste 3.5.5: Objekttyp, Referenz auf das Benutzer-Schnittstellen-Element
- Benutzer-Schnittstellen-Element-Inhaltsliste 3.5.6: Referenz auf das Benutzer-Schnittstellen-Element, Liste von Inhalten mit zugehörigen Objekttypen

Neue Aspekte der Erfindung sind: Objekt-Ebene, einheitliche Objekt-Beschreibung, Trennung zwischen Anwendungen, Content/Objekten, Benutzer-Schnittstellen und eingehende und ausgehende Objekte und Übertragungstechnik.

Die neuen Aspekte ermöglichen eine applikationsübergreifende Verwendung von Objekten/Inhalten auf Terminals sowie ein Versenden und Empfangen von Objekten/Inhalten unabhängig von der Übertragungstechnologie (z.B. SMS, MMS, Email, WAP Push, BlueTooth)

Objekte, Anwendung und Benutzer-Schnittstellen "leben" in verschiedenen Ebenen und sind deshalb voneinander getrennt

Die Anwendungs-Ebene 2 enthält die Logik, Objekte auszuwählen, zu verwalten und zu manipulieren.

Die Anwendungs-Ebene 2 kontrolliert die visuelle Erscheinung der Anwendung selbst und der Objekte, die in der Anwendung dargestellt werden

Die Anwendungs-Ebene 2 enthält eine Liste verfügbarer Benutzer-Schnittstellen-Elemente, die für die Darstellung der Anwendung und der Objekte genutzt werden können. Diese Liste kann vor und nach dem Launch des Terminals verändert werden, ohne dass die gesamte Anwendungssoftware verändert zu werden braucht.

Die Objekt-Ebene 1 enthält die Objekte, die damit auf einer anwendungsunabhängigen Ebene gespeichert und verwaltet werden. Die Objekte werden durch einen Objekt-Manager 1.1 ausgewählt. Die User-Interface-Ebene 3 enthält einen Mechanismus zur Darstellung und Manipulation der Elemente. Die User-Interface-Ebene 3 enthält Templates und Themes (einzelne visuelle Elemente) für die Darstellung von Anwendungen und Objekten. Die Templates und Themes können vor und nach dem Launch eines Terminals verändert werden, ohne dass die gesamte Software der User-Interface Ebene 3 verändert zu werden braucht.

Die UTOs haben ein einheitliches Objekt-Beschreibungsformat. Das Format ermöglicht es, dass die Objekte grundsätzlich von allen Anwendungen verarbeitet und von der User-Interface-Ebene 3 dargestellt werden können.

Das Beschreibungsformat enthält Informationen für die folgenden drei Informationstypen: Identifikations-Parameter, Inhalts-Parameter, Nutzungs-Parameter

Im User Interface können Objekte auf unterschiedliche Art und Weise dargestellt werden. Welche Daten der Objekte wie dargestellt werden, wird durch die Benutzer-Schnittstellen Templates bestimmt. Welche Benutzer-Schnittstellen Templates verwendet werden, wird durch die Anwendung festgelegt. Alternativ kann dies auch im Objekt selbst hinterlegt sein.

Die UTOs sind prinzipiell unabhängig von der Übertragungstechnologie zu sehen, d.h. ein UTO kann per SMS, MMS, Broadcast, BlueTooth, Infrarot, mit GSM, UMTS, HSDPA etc. zum Terminal gesendet werden.

Die Objekt-Parameter definieren die einheitliche Beschreibung der Unified Terminal Objects und ihre Verwendungsweise. Es lassen sich drei Klassen von Objekt-Parametern unterscheiden, die unabhängig voneinander definiert sind und genutzt werden können:
- Identifikations-Parameter (OP 1.0)
- Inhalts-Parameter (OP 2.0)
- Nutzungs-Parameter (OP 3.0)
Nachfolgend sind die drei Parameter-Klassen beschrieben.

### Identifikations-Parameters (OP 1.0):

Der Zweck von "Identifikations-Parametern" ist die Verwaltung des Objekts zu unterstützen:
- Objekt ID (OP 1.1)
- Objekt Erzeuger (OP 1.2)
- Objekt Eigentümer (OP 1.3)
- Objekt Editor (OP 1.4)
- Objekt Erzeugungsdatum (OP 1.5)
- Objekt Empfangsdatum (OP 1.6)
- Objekt Sender (OP 1.7)
- Objekttyp (OP 1.8)
- Objekt Empfänger (OP 1.9)
- Objekt Sendedatum (OP 1.10)

### Inhalts-Parameters (OP 2.0):

Der Zweck von "Inhalts-Parametern" ist die Inhalte der Objekte aus Benutzersicht zu definieren. Die Daten der Inhalts-Parameter werden grundsätzlich verwendet, um sie auf dem Display von Terminals darzustellen.

Die einzelnen Inhalts-Parameter sind:
- Titel (OP 2.1)
- Beschreibung (OP 2.2)
- Liste von Schlüsselwörtern (OP 2.3)
- Liste von Inhalts-Objekten; jedes Inhalts-Objekt ist spezifiziert durch: Name, Medienobjekt (z.B. text, Bild, Video etc.), Netzwerkadresse (OP 2.4)

### Nutzungs-Parameters (OP 3.0):

Der Zweck der Nutzungs-Parameter ist zu definieren, wie Objekte genutzt werden können.

Die einzelnen Nutzungs-Parameter sind:
- DRM Information (OP 3.1)
- Objekt-Zustand (full, trial) (OP 3.2)
- Benutzungs-Kontrolle (lesen, schreiben, löschen) (OP 3.3)
- Trigger (Gebrauchsstart, Gebrauchszeit, Gültigkeitsdatum) (OP 3.4)

### Nachfolgend werden verschiedene Use Cases (UC) beschrieben:

### UC.1 Objekt empfangen und speichern:

Trigger: Das Terminal empfängt ein Signal, das ein Objekt empfangen wird.
**UC.1.1** Der Eingehende-Objekt-Manager 2.2 empfängt ein Objekt (peer-to-peer Nachricht)
**UC 1.2** Der Eingehende-Objekt-Manager 2.2 identifiziert den Objekttyp (OP 1.8) **UC 1.3** Der Eingehende-Objekt-Manager 2.2 prüft das Objekt auf Sicherheit, Kompatibilität, Erlaubnis, Verschlüsselung, Viren etc.
**UC 1.4** Wenn der Eingehende-Objekt-Manager 2.2 das Objekt akzeptiert, trägt er einen Zeitstempel (OP 1.6) und den Sender (OP 1.7) in das Objekt ein.
**UC 1.5** Danach übergibt der Eingehende-Objekt-Manager 2.2 das Objekt an den Objekt-Manager 1.1.
**UC 1.6** Der Objekt-Manager 1.1 liest den Objekttypen (OP 1.8), speichert das Objekt und aktualisiert die Objekt-Referenzliste 1.1.1; der Objekt-Manager 1.1 prüft in der Objekttyp-Anwendungsliste 1.1.2, was die zum Objekttypen zugehörige Default-Anwendung ist. Der Objekt-Manager 1.1 über gibt an diese Anwendung die Objekt-Referenz und den Objekttypen.

### UC 2 Objekt darstellen:

Trigger: Eine Anwendung erhält den Befehl, anwendungsbezogene Objekte darzustellen.
**UC 2.1** Die Anwendung 2.1 fordert von dem Objekt-Manager 1.1 einen Objekt-Typen (oder mehrere) und erhält vom Objekt-Manager 1.1 eine Liste aller Objekt-Referenzen mit Objekt-Typen zurück, die zu den übergebenen Objekt-Typen gehören.
**UC 2.2** Die Anwendung 2.1 organisiert, sortiert und filtert die erhaltenen Objekt-Referenzen und erstellt eine Liste von Objekt-Referenzen mit den zugehörigen Objekt-Typen, die zuerst dargestellt werden sollen.
**UC 2.3** Die Anwendung 2.1 greift auf die Benutzer-Schnittstellen-Element-Liste 3.5.5 zu und erhält das zu den Objekt-Typen zugehörige Benutzer-Schnittstellen-Element. Zudem hat die Anwendung 2.1 Zugriff auf die Benutzer-Schnittstellen-Element-Content-Referenzliste 3.5.6 und ermittelt die benötigten Inhalte für das ausgewählte Benutzer-Schnittstellen-Element.
**UC 2.4** Die Anwendung 2.1 fragt die benötigten Elemente, greift auf die Benutzer-Schnittstellen-Element-Liste 3.5.5 zu und erhält das zu den Objekt-Typen zugehörige Benutzer-Schnittstellen-Element. Zudem hat die Anwendung 2.1 Zugriff auf die Benutzer-Schnittstellen-Element-Content-Referenzliste 3.5.6 und ermittelt die benötigten Inhalte für das ausgewählte Benutzer-Schnittstellen-Element. Die Anwendung 2.1 fragt die benötigten Inhalte beim Objekt-Manager 1.1 an. Wenn die Objekt-Inhalte (OP 2.4) im Netzwerk liegen, werden diese aus dem Netzwerk ausgelesen.
**UC 2.5** Die Anwendung 2.1 übergibt die erhaltenen Inhalte, die Objekt-Referenzen und die Referenz auf das ausgewählte Benutzer-Schnittstellen-Element an die Darstellungs-Ebene 3.
**UC 2.6** Die Darstellungs-Ebene 3 empfängt die Inhalte, die Objekt-Referenz und die Referenz auf das ausgewählte Benutzer-Schnittstellen-Element. Die Benutzer-Schnittstellen-Engine 3.1 fordert das Benutzer-Schnittstellen-Element aus der Benutzer-Schnittstellen-Library 3.5 an. Es fügt die Inhalte und die Objekt-Referenz zum Benutzer-Schnittstellen-Element hinzu und übergibt es an die Hardware-Schnittstelle 3.3, wo es dann für den Benutzer wahrnehmbar gemacht wird.

### UC 3 Objekt mit Meldungs-Manager 2.3 darstellen:

Trigger: Eine Anwendung 2.1 hat ein Objekt oder ein Event erhalten.
**UC 3.1** Die Anwendung 2.1 empfängt die Objekt-Referenz und den Objekttypen und entscheidet, was mit dem Objekt zu machen ist.
**UC 3.2** Die Anwendung 2.1 entscheidet, den Benutzer über das eingegangene Objekt zu informieren
**UC 3.3** Die Anwendung 2.1 informiert den Meldungs-Manager 2.3 und übergibt die Objekt-Referenz und den Objekttypen an den Meldungs-Manager 2.3.
**UC 3.4** Der Meldungs-Manager 2.3 empfängt den Objekttypen und die Objekt-Referenz. Der Meldungs-Manager 2.3 greift auf die Objekt-Benutzer-Schnittstellen-Element-Liste 3.5.5 zu und erhält das zum Objekttyp zugehörige Benutzer-Schnittstellen-Element. Zudem hat der Meldungs-Manager 2.3 Zugriff auf die Benutzer-Schnittstellen-Element-Inhaltsliste 3.5.6 und ermittelt die benötigten Inhalte für das ausgewählte Benutzer-Schnittstellen-Element.
**UC 3.5** Der Meldungs-Manager 2.3 fragt die benötigten Inhalte vom Objekt-Manager 1.1 an. Nachdem der Meldungs-Manager 2.3 die Inhalte erhalten hat, übergibt er die Inhalte, die Objekt-Referenz und die Referenz auf das ausgewählte Benutzer-Schnittstellen Element an die Darstellungs-Ebene 3.
**UC 3.6** Die Darstellungs-Ebene 3 empfängt die Inhalte, die Objekt-Referenz und die Referenz auf das ausgewählte Benutzer-Schnittstellen-Element. Die Benutzer-Schnittstellen-Engine 3.1 fordert das Benutzer-Schnittstellen-Element aus der Benutzer-Schnittstellen-Library 3.5 an. Es fügt die Inhalte und die Objekt-Referenz zum Benutzer-Schnittstellen-Element hinzu und übergibt es an die Hardware-Schnittstelle 3.3, wo es dann für den Benutzer wahrnehmbar gemacht wird.

### UC.4 Objekt versenden:

Trigger: Ein Benutzer hat ein Objekt mit einer Anwendung 2.1 erstellt; der Benutzer hat eine Empfänger-Adresse eingegeben und "Send" gedrückt.
**UC.4.1** Die Kompositions-Anwendung bereitet das Versenden des Objekts vor, indem Objekt-Parameter gespeichert werden: Objekt-Inhalte werden im Objekt-Parameter Liste von Inhalts-Parameter (OP 2.4) gespeichert. Optional werden weitere Objekt-Daten gespeichert: Objekt-Titel (OP 2.1), Objekt-Beschreibung (OP 2.2), eine Liste von Schlüsselwörtern (OP 2.3). Die Kompositions-Anwendung speichert im komponierten Objekt eine Objekt ID (OP 1.1), eine Identität für den Objekt-Eigentümer (OP 1.3) und den Objekt-Editor (OP 1.4), das Erzeugungsdatum (OP 1.5), eine Identität für den Sender (OP 1.7), den Objekt-Typen (OP 1.8) und den Objekt Empfänger (OP 1.9). Die Kompositions-Anwendung speichert zudem Nutzungsparameter: DRM Information (OP 3.1), Objekt-Zustand (OP 3.2), Benutzungs-Kontrolle (OP 3.3) und Trigger (OP 3.4).
**UC 4.2** Die Kompositions-Anwendung übergibt das Objekt an den Objekt-Manager 1.1.
**UC 4.3** Der Objekt-Manager 1.1 speichert das Objekt in der Objekt-Referenz-Liste 1.1.1 und übergibt die Objekt-Referenz an die Kompositions-Anwendung.
**UC 4.4** Die Kompositions-Anwendung übergibt die Objekt-Referenz an den Ausgehende-Objekt-Manager 2.4.
**UC 4.5** Der Ausgehende-Objekt-Manager 2.4 fragt beim Objekt-Manager 1.1 das Objekt an.
**UC 4.6** Nach Erhalt des Objekts verpackt der Ausgehende-Objekt-Manager 2.4 das Objekt in einem netzwerktypischen Container und übergibt das Objekt an das Netzwerk.
**UC 4.7** Der Ausgehende-Objekt-Manager 2.4 übergibt an den Objekt-Manager 1.1 das Sende-Datum des Objekts, das der Objekt-Manager 1.1 im Objekt-Parameter Sende-Datum (OP 1.10) speichert.

### UC.5.1 Ins Tagebuch eintragen:

Trigger: Der Eingehende-Objekt-Manager 2.2 hat ein Objekt empfangen und die Objekt-Referenz an den Objekt-Manager 1.1 zur Speicherung übergeben und die Objekt-Referenz vom Objekt-Manager 1.1 zurückerhalten.
**UC 5.1** Der Eingehende-Objekt-Manager 2.2 übergibt an den Tagebuch-Manager 2.5 die Objekt-Referenz und eine Aktion, z.B. "Objekt empfangen". Der Tagebuch-Manager 2.5 trägt die Objekt-Referenz und die Aktion zusammen mit anderen Werten, z.B. Zeitstempel, Ort etc., in die Tagebuchliste 2.5.3 ein.

### UC.5.2 Aus dem Tagebuch auslesen:

Trigger: Der Benutzer ruft eine Funktion aus, alle Objekte anzuzeigen, die das Telefon empfangen hat.
**UC 5.2.1** Der Anwendung 2.1 übergibt an den Tagebuch-Manager 2.5 den ObjektTyp, z.B. "Anrufe", "Nachrichten", und den gewünschten Aktionstyp, z.B. "Eingegangen".
**UC 5.2.2** Der Tagebuch-Manager 2.5 liest alle Objekt-Referenzen aus, die dem Objekttyp und dem Aktionstyp entsprechen. Er übergibt die Liste mit Objekt-Referenzen, Objekttypen und anderen Werten, z.B. Aktionstyp, Zeitstempel etc., an die Anwendung 2.1 zurück.
**UC 5.2.3** Die Anwendung 2.1 kann die erhaltenen Objekte darstellen.

### UC.6 Anzeige von Objekten von verschiedenen Quellen (auf dem Telefon und auf einem Server):

Eine Spiele-Anwendung listet alle Spiele des Anwenders auf und bietet gleichzeitig neue Spiele zum Kaufen an. In diesem Fall befinden sich diese Spiele noch nicht im Besitz des Kunden. Teile dieser Spiele-UTO's befinden sich auch noch nicht auf dem elektronischen Endgerät, insbesondere dem Mobiltelefon, des Kunden - z.B. die Installationsdatei. Zur Darstellung werden die gleichen Benutzer-Schnittstellen-Elemente verwendet. Der Unterschied besteht nur in den Eigentumsrechten und eventuell darin, dass sich noch nicht alle Objektelemente (z.B. die Installationsdatei des Spieles) auf dem Mobiltelefon befinden.

UC 6.1 Die Spiele-Anwendung listet alle Spiele des Anwenders auf, die sich auf dem Mobiltelefon befinden, indem sie sich für diesen Fall das entsprechende Benutzer-Schnittstellen-Element aus der Objekt-Benutzer-Schnittstellen-Element-Liste 3.5.5 holt. Zusätzlich ermittelt die Spiele-Anwendung nach Lesen der Element-Content-Referenzliste 3.5.6, welche Inhalte der Objekte nötig zur Anzeige sind. Nachdem die Spiele-Anwendung alle benötigten Inhalte erhalten hat, übergibt sie diese mit der Objektreferenz, oder im Falle von mehreren Spielen mehrere Objektreferenzen, und die Referenz auf das ausgewählte Benutzer-Schnittstellen-Element an die Darstellungs-Ebene 3.

Es folgt UC 1.10 zur Anzeige der Elemente.

UC 6.2 Die Spiele-Anwendung soll zusätzlich Spiele auflisten, die der Anwender kaufen kann. Prinzipiell läuft der Lesevorgang der Objektparameter und die Auswahl des Benutzer-Schnittstellen-Elements genauso ab wie in UC 3.1. Je nachdem aber, ob sich die anzuzeigenden Spiele bereits auf dem Telefon (beim Objektmanager) oder noch im Netz liegen ist eine Verbindung über das Netz notwendig, um die notwendigen Parameter zu lesen.

UC 6.3 Wählt der Anwender eines der zu kaufenden Spiele aus um mehr Informationen zu erhalten, wählt die Spiele-Anwendung ein anderes Benutzer-Schnittstellen-Element zur Darstellung über den Darstellungs-Ebene 3.

UC 6.4. Entscheidet sich der Anwender zum Kauf, verbindet sich die Spiele-Anwendung mit den entsprechenden Systemen im Netz um den Kaufvorgang und Downloadvorgang durchzuführen.

UC 6.5 Weiter mit UC 1 Objekt empfangen und speichern

UC 6.6 Die Spiele-Anwendung erhält die Referenz auf das Spiele-Objekt, das nun im Besitz des Kunden ist (entsprechende Nutzungsparameter OP 3.0). Eine Aktualisierung der Anzeige (UC 3.1) zeigt dem Anwender nun sein neu erworbenes Spiel in der Liste seiner Spiele.

## Patentansprüche

1. Verfahren zur anwendungsübergreifenden Verwendung von Objekten in einem elektronischen Endgerät, bei dem in einer Anwendungs-Ebene (2) Objekte durch eine Anwendung/Applikation (2.2) in Form eines Eingehende-Objekte-Managers empfangen und im Hinblick auf Sicherheit, Kompatibilität, Erlaubnis, Verschlüsselung, Viren geprüft werden, bei dem die Objekte nach der Prüfung durch die Anwendung/Applikation (2.2) an eine Objekt-Ebene (1) übergeben werden, wo den Objekten eine einheitliche Beschreibungsstruktur unabhängig vom Träger, Objekttyp, Inhalt, Ursprung, Verwendungszweck zugeordnet wird, bei dem in der Objekt-Ebene (1) die Objekte verwaltet werden, indem in der Objekt-Ebene (1) die Objekte anwendungsunabhängig gespeichert, aktualisiert, gelöscht, gelesen und/oder weitergeleitet werden, und über wenigstens eine Anwendungs-Schnittstelle (1.2) der Anwendungs-Ebene (2), die zumindest eine Anwendung/Applikation (2.1, 2.2, 2.3, 2.4, 2.5) aufweist, verfügbar gemacht werden, bei dem in der Anwendungs-Ebene (2) die Objekte anwendungsspezifisch verarbeitet werden, indem die Objekte durch verschiedene Anwendungen/Applikationen (2.1, 2.2, 2.3, 2.4, 2.5) anwendungsspezifisch erstellt, verändert und/oder gelöscht werden, wobei die Anwendungs-Ebene (2) über wenigstens eine Objekt-Schnittstelle (2.1.1, 2.2.1, 2.3.1, 2.4.1, 2.5.1) mit der Objekt-Ebene (1) kommuniziert und über wenigstens eine Darstellungs-Schnittstelle (2.1.2, 2.2.2, 2.3.2, 2.4.2, 2.5.2) mit einer Darstellungs-Ebene (3) kommuniziert, bei dem in der Darstellungs-Ebene (3), die wenigstens eine Hardware-Schnittstelle (3.3) zu einer Anzeige-/Eingabeeinrichtung (4.1) aufweist, die Objekte für einen Betrachter wahrnehmbar gemacht werden, wobei die Darstellungs-Ebene (3) über wenigstens eine weitere Schnittstelle (3.2) mit der Anwendungs-Ebene (2) kommuniziert, und bei dem in der Anzeigeeinrichtung (4.1) die Objekte über wenigstens eine Schnittstelle (4.2) dem Betrachter angezeigt werden.

2. Verfahren nach Anspruch 1, **dadurch gekennzeichnet, dass** die Objekte in der Objekt-Ebene (1) in vordefinierte Typen und/oder Parameter umgewandelt werden.

3. Verfahren nach Anspruch 1 oder 2, **dadurch gekennzeichnet, dass** mittels der Eingabeeinrichtung (4.1) die Objekte über wenigstens eine Schnittstelle (4.2) dem Betrachter manipulierbar gemacht werden.

4. Verfahren nach Anspruch 1, **dadurch gekennzeichnet, dass** in der Objekt-Ebene (1) die Objekte durch einen Objekt-Manager (1.1) anwendungsunabhängig aktualisiert, gelöscht, identifiziert, gelesen und/oder weitergeleitet werden und die Objekte in einer Objekt-Library (1.4) gespeichert werden, wobei die Kommunikation zwischen dem Objekt-Manager (1.1) und der Objekt-Library (1.4) über eine Objekt-Schnittstelle (1.3) erfolgt, und dass der Objekt-Manager (1.1) nach dem Lesen eines Objektes und dem Weiterleiten des Objektes zu der Objekt-Library (1.4) in einer Objekt-Referenzliste (1.1.1) die Kennung des Objektes speichert und in einer Objekttyp-Anwendungsliste (1.1.2) vermerkt, durch welche Anwendung/Applikation (2.1, 2.2, 2.3, 2.4, 2.5) in der Anwendungs-Ebene (2) das Objekt verarbeitet werden kann.

5. Verfahren nach Anspruch 1, **dadurch gekennzeichnet, dass** die Anwendungen/Applikationen (2.1, 2.2, 2.3, 2.4, 2.5) vom Objekt-Manager (1.1) Objekte anfordern und der Objekt-Manager (1.1) nach der Anforderung die Objekte an die Anwendungen/Applikationen (2.1, 2.2, 2.3, 2.4, 2.5) zur Bearbeitung übergibt.

6. Verfahren nach einem der Ansprüche 1 bis 5, **dadurch gekennzeichnet, dass** in der Anwendungs-Ebene (2) die Anwendungen/Applikationen (2.1, 2.2, 2.3, 2.4, 2.5) über die wenigstens eine Darstellungs-Schnittstelle (2.1.2, 2.2.2, 2.3.2, 2.4.2, 2.5.2) mit einer Benutzer-Schnittstellen-Engine (3.1) der Darstellungs-Ebene (3) kommunizieren und dass die Anwendungen/Applikationen (2.1, 2.2, 2.3, 2.4, 2.5) die Benutzer-Schnittstellen-Engine (3.1) anweisen, welches anwendungs-/applikationsspezifische und/oder objektspezifische Benutzer-Schnittstellen-Element für die Wahrnehmbarmachung und/oder Manipulation von Objekten benötigt werden.

7. Verfahren nach einem der Ansprüche 1 bis 6, **dadurch gekennzeichnet, dass** in der Darstellungs-Ebene (3) eine Benutzer-Schnittstellen-Engine (3.1) die Objekte über die Hardware-Schnittstelle (3.3) zu einer Anzeige-/Eingabeeinrichtung (4.1) weiterleitet, um die Objekte für einen Betrachter wahrnehmbar zu machen.

8. Verfahren nach Anspruch 7, **dadurch gekennzeichnet, dass** die Benutzer-Schnittstellen-Engine (3.1) über eine Library-Schnittstelle (3.4) mit einer Benutzer-Schnittstellen-Library (3.5) und die Benutzer-Schnittstellen-Library (3.5) über eine Benutzer-Schnittstellen-Engine-Schnittstelle (3.5.3) mit der Benutzer-Schnittstellen-Engine (3.1) kommuniziert, um bestimmte Benutzer-Schnittstellen-Elemente, die zur Wahrnehmbarmachung und/oder Manipulation eines oder mehrere Objekte(s) benötigt werden, auszuwählen bzw. weiterzuleiten.

9. Verfahren nach einem der Ansprüche 1 bis 8, **dadurch gekennzeichnet, dass** die Benutzer-Schnittstellen-Library (3.5) über eine Benutzer-Schnittstellen-Wartungs-Schnittstelle (3.5.4) gewartet wird.

10. Verfahren nach einem der Ansprüche 1 bis 9, **dadurch gekennzeichnet, dass** die Anwendungen/Applikationen (2.1, 2.2, 2.3, 2.4, 2.5) Objekte untereinander austauschen.

11. Terminal-Ebenen-Modell zur anwendungsübergreifenden Verwendung von Objekten auf einem elektronischen Endgerät, aufweisend eine Objekt-Ebene (1) zur Verwaltung von Objekten, eine Anwendungs-Ebene (2) zur anwendungsspezifischen Verarbeitung von Objekten und eine Darstellungs-Ebene (3) zur Wahrnehmbarmachung und Manipulierung der Objekte, wobei die Objekt-Ebene (1) wenigstens eine Anwendungs-Schnittstelle (1.2) zur Anwendungs-Ebene (2), die Anwendungs-Ebene (2) wenigstens eine Objekt-Schnittstelle (2.1.1, 2.2.1, 2.3.1, 2.4.1, 2.5.1) zur Objekt-Ebene (1) und wenigstens eine Darstellungs-Schnittstelle (2.1.2, 2.2.2, 2.3.2, 2.4.2, 2.5.2) zur Darstellungs-Ebene (3) und die Darstellungs-Ebene (3) wenigstens eine Anwendungs-Schnittstelle (3.2) zur Anwendungs-Ebene (2) und wenigstens eine Hardware-Schnittstelle (3.3) zu einer Anzeige-/Eingabeeinrichtung (4.1) aufweist, **dadurch gekennzeichnet, dass** die Objekt-Ebene (1) zur Zuordnung einer einheitlichen Beschreibungsstruktur unabhängig vom Träger, Objekttyp. Inhalt, Ursprung, Verwendungszweck zu den Objekten ausgebildet ist, dass in der Objekt-Ebene (1) die Objekte anwendungsunabhängig gespeichert, aktualisiert, gelöscht, gelesen und/oder weitergeleitet werden dass die Anwendungs-Ebene (2) eine Anwendung/Applikation (2.2) in Form eines Eingehende-Objekte-Managers aufweist, in dem empfangene Objekte im Hinblick auf Sicherheit, Kompatibilität, Erlaubnis, Verschlüsselung, Viren geprüft werden, und dass die Objekte nach der Prüfung durch die Anwendung/Applikation (2.2) an die Objekt-Ebene (1) übergeben werden, und dass die Anwendungs-Ebene verschiedene Anwendungen/Applikationen (2.1, 2.2, 2.3, 2.4, 2.5) aufweist, durch die die Objekte anwendungsspezifisch erstellt, verändert und/oder gelöscht werden.

12. Terminal-Ebenen-Modell nach Anspruch 11, **dadurch gekennzeichnet, dass** die Objekt-Ebene (1) wenigstens eine Speichereinrichtung (1.6), die Anwendungs-Ebene (2) wenigstens eine Speichereinrichtung (2.6) und die Darstellungs-Ebene (3) wenigstens eine Speichereinrichtung (3.6) aufweist und/oder dass das Terminal-Ebenen-Modell eine Anzeige-/Eingabeeinrichtung (4.1) aufweist, wobei die Anzeige-/Eingabeeinrichtung (4.1) wenigstens eine Darstellungs-Schnittstelle (4.2) zur Darstellungs-Ebene (3) aufweist.

13. Terminal-Ebenen-Modell nach Anspruch 12, **dadurch gekennzeichnet, dass** in der Objekt-Ebene (1) ein Objekt-Manager (1.1) vorgesehen ist, der über die wenigstens eine Anwendungs-Schnittstelle (1.2) mit der Anwendungs-Ebene (2) kommuniziert, und dass in der Objekt-Ebene (1) eine Objekt-Library (1.4) zur Speicherung der Objekte vorgesehen ist, wobei der Objekt-Manager (1.1) über wenigstens eine Objekt-Schnittstelle (1.3) mit der Objekt-Library (1.4) kommuniziert.

14. Terminal-Ebenen-Modell nach einem der Ansprüche 12 oder 13, **dadurch gekennzeichnet, dass** die Speichereinrichtung (2.6) der Anwendungs-Ebene (2) zur Speicherung von servicebezogenen Anwendungen/Applikationen (2.1, 2.2, 2.3, 2.4, 2.5) ausgebildet ist.

15. Terminal-Ebenen-Modell nach einem der Ansprüche 11 bis 14, **dadurch gekennzeichnet, dass** die Darstellungs-Ebene (3) wenigstens eine Schnittstellen-Engine (3.1) und eine Schnittstellen-Bibliothek (3.5) aufweist, wobei die Schnittstellen-Engine (3.1) zur Kommunikation mit der Schnittstellen-Bibliothek (3.5) eine Library-Schnittstelle (3.4) und die Schnittstellen-Bibliothek (3.5) zur Kommunikation mit der Schnittstellen-Engine (3.1) eine Benutzer-Schnittstellen-Engine-Schnittstelle (3.5.3) aufweist und/oder dass die Benutzer-Schnittstellen-Library (3.5) ein Benutzer-Schnittstellen-Wartungs-Schnittstelle (3.5.4) aufweist.

16. Terminal-Ebenen-Modell nach einem der Ansprüche 11 bis 15, **dadurch gekennzeichnet, dass** die servicebezogene Anwendungen/Applikationen (2.1, 2.2, 2.3, 2.4, 2.5) ein Anwendungsmanager (2.1), ein Meldungs-Manager (2.3), ein Ausgehende-Objekt-Manager (2.4) und ein Tagebuch-Manager (2.5) sind.

17. Elektronisches Endgerät zur anwendungsübergreifenden Verwendung von Objekten, **dadurch gekennzeichnet, dass** dieses ein Terminal-Ebenen-Modell nach einem der Ansprüche 11 bis 16 aufweist.

18. Elektronisches Endgerät nach Anspruch 17, **dadurch gekennzeichnet, dass** dieses eine Vorrichtung zum Senden und Empfangen von Objekten aufweist.

## Claims

1. A method for the cross-application use of objects in an electronic terminal, in which, in an application level (2), objects are received by an application (2.2) in form of an incoming objects manager and are checked in view of security, compatibility, permission, encryption, viruses, in which the objects, after the check via application (2.2), are delivered to an object level (1), where an unique description structure independent from the carrier, object type, content, origin, purpose of use is allocated to the objects, in which the objects are managed in object level (1), by application independently storing, updating, deleting, reading and/or transmitting the objects in the object level (1) and by making them available via at least one application interface (1.2) of the application level (2), which comprises at least one application (2.1, 2.2, 2.3, 2.4, 2.5), in which the objects are application specifically processed in the application level (2), by application specifically generating, modifying and/or deleting the objects by means of different applications (2.1, 2.2, 2.3, 2.4, 2.5), wherein the application level (2) communicates with the object level (1) via at least one object interface (2.1.1, 2.2.1, 2.3.1, 2.4.1, 2.5.1) and via at least one presentation interface (2.1.2, 2.2.2, 2.3.2, 2.4.2, 2.5.2) with a presentation level (3), in which in the presentation level (3), which comprises at least one hardware interface (3.3) to a display/input device (4), the objects are made perceptible to a viewer, wherein the presentation level (3) via at least one additional interface (3.2) communicates with the application level (2), and in which in the display device (4.1) the objects are displayed to the viewer via at least one interface (4.2).

2. The method according to claim 1, **characterized in that** the objects are converted in the object level (1) into pre-defined types and/or parameters.

3. The method according to claim 1 or 2, **characterized in that** by means of the input device (4.1) the objects are made manipulatable to the viewer via at least one interface (4.2).

4. The method according to claim 1, **characterized in that** in the object plane (1) the objects are application independently updated, deleted, identified, read and/or forwarded by an object manager (1.1) and the objects are stored in an object library (1.4), wherein the communication between the object manager (1.1) and the object library (1.4) is performed via an object interface (1.3), and that the object manager (1.1), after reading one of the objects and forwarding the object to the object library (1.4), stores the object identifier in an object reference list (1.1.1) and notes in an object type application list (1.1.2), by which application (2.1, 2.2, 2.3, 2.4, 2.5) in the application level (2) the object can be processed.

5. The method according to claim 1, **characterized in that** the applications (2.1, 2.2, 2.3, 2.4, 2.5) request objects from the object manager (1.1) and the object manager (1.1), after the request, hands over the objects to the applications (2.1, 2.2, 2.3, 2.4, 2.5) for processing

6. The method according to anyone of claims 1 to 5, **characterized in that** in the application level (2) the applications (2.1, 2.2, 2.3, 2.4, 2.5) communicate via the at least one presentation interface (2.1.2, 2.2.2, 2.3.2, 2.4.2, 2.5.2) with an user interface engine (3.1) of the presentation level (3) and that the applications (2.2, 2.2, 2.3, 2.4, 2.5) instruct the user interface engine (3.1), which application specific and/or object specific user interface element are needed for the perceptual making and/or the manipulation of objects.

7. The method according to anyone of claims 1 to 6, **characterized in that** in the presentation level (3) a user interface engine (3.1) forwards the objects via a hardware interface (3.3) to a display/input device (4.1) to make the objects perceptible to a viewer.

8. The method according to claim 7, **characterized in that** the user interface engine (3.1) via a library interface (3.4) with a user interface library (3.5) and the user interface library (3.5) via a user interface engine interface (3.5.3) communicates with the user interface engine (3.1) to select or forward particular user interface elements, which are needed for the perceptual making and / or the manipulation of one or more objects.

9. The method according to anyone of claims 1 to 8, **characterized in that** the user interface library (3.5) is maintained via a user interface maintenance interface (3.5.4).

10. The method according to anyone of claims 1 to 9, **characterized in that** the applications (2.1, 2.2, 2.3, 2.4, 2.5) exchange objects with each other.

11. A terminal level model for the cross-application use of objects on an electronic terminal, comprising an object level (1) for managing objects, an application level (2) for application specifically processing objects and a presentation level (3) for making perceptible and manipulating the objects, wherein the object level (1) comprises at least one application interface (1.2) to the application level (2), the application level (2) at least one object interface (2.1.1, 2.2.1, 2.3.1, 2.4.1, 2.5.1) to the object level (1) and at least one presentation level (2.1.2, 2.2.2, 2.3.2, 2.4.2, 2.5.2) to the presentation level (3) and the presentation level (3) at least one application interface (3.2) to the application level (2) and at least one hardware interface (3.3) to a display/input device (4.1), **characterized in that** the object level (31) is provided for allocating a unique description structure independent from the carrier, object type, content, origin, purpose of use to the objects, that in the object plane (1) the objects are application independently stored, updated, deleted, read and/or forwarded, that the application level (2) comprises an application (2.2) in form of an incoming objects manager, in which received objects are checked in view of security, compatibility, permission, encryption, viruses, and that the objects, after the check by the application (2.2), are handed to the object level (1), and that the application level comprises different applications (2.1, 2.2, 2.3, 2.4, 2.5), by means of which the objects are application specifically generated, modified and/or deleted.

12. The terminal level model according to claim 11, **characterized in that** the object level (1) comprises at least one memory device (1.6), the application level (2) at least one memory device (2.6) and the presentation level (3) at least one memory device (3.6) and/or that the terminal level model comprises a display/input device (4.1), wherein the display/input device (4.1) comprises at least one presentation interface (4.2) to the presentation level (3).

13. The terminal level model according to claim 12, **characterized in that** in the object level (1) an object manager (1.1) is provided, which via the at least one application interface (1.2) communicates with the application level (2), and that in the object level (1) an object library (1.4) is provided for storing the objects, wherein the object manager (1.1) via at least one object interface (1.3) communicates with the object library (1.4).

14. The terminal level model according to claim 12 or 13, **characterized in that** the memory device (2.6) of the application level (2) is provided for storing service related applications (2.1, 2.2, 2.3, 2.4, 2.5).

15. The terminal level model according to anyone of claims 11 to 14, **characterized in that** the presentation level (3) comprises at least one interface engine (3.1) and an interface library (3.5), wherein the interface engine (3.1) for communication with the interface library (3.5) comprises a library interface (3.4) and the interface library (3.5) for communication with the interface engine (3.1) comprises a user interface engine interface (3.5.3) and/or that the user interface library (3.5) comprises a user interface maintenance interface (3.5.4).

16. The terminal level model according to anyone of claims 11 to 15, **characterized in that** the service related applications (2.1, 2.2, 2.3, 2.4, 2.5) are an application manager (2.1), a message manager (2.3), an outgoing object manager (2.4), and a diary manager (2.5).

17. An electronic terminal for the cross-application use of objects, **characterized in that** it comprises a terminal level model according to anyone of claims 11 to 16.

18. The electronic terminal according to claim 17, **characterized in that** it comprises a device for sending and receiving objects.

## Revendications

1. Procédé servant à utiliser de manière transversale aux applications des objets dans un terminal électronique, dans lequel dans un niveau application (2), des objets sont reçus par une application (2.2) sous la forme d'un gestionnaire d'objets entrants et sont vérifiés en ce qui concerne la sécurité, la compatibilité, l'autorisation, le cryptage, les virus, dans lequel les objets sont transmis après la vérification par l'application (2.2) à un niveau objet (1), où une structure de description homogène est associée aux objets indépendamment du support, du type d'objet, du contenu, de l'origine, de l'usage prévu, dans lequel dans le niveau objet (1), les objets sont administrés en ce que les objets sont stockés, mis à jour, supprimés, lus et/ou transférés indépendamment de l'application et sont mis à la disposition du niveau application (2) par l'intermédiaire d'au moins une interface d'application (1.2), qui présente au moins une application (2.1, 2.2, 2.3, 2.4, 2.5), dans lequel dans le niveau application (2), les objets sont traités de manière spécifique à l'application en ce que les objets sont créés, modifiés et/ou supprimés de manière spécifique à l'application par différentes applications (2.1, 2.2, 2.3, 2.4, 2.5), dans lequel le niveau application (2) communique avec le niveau objet (1) par l'intermédiaire d'au moins une interface d'objet (2.1.1, 2.2.1, 2.3.1, 2.4.1, 2.5.1) et communique avec un niveau représentation (3) par l'intermédiaire d'au moins une interface de représentation (2.1.2, 2.2.2, 2.3.2, 2.4.2, 2.5.2), dans lequel les objets sont rendus perceptibles pour un observateur dans le niveau représentation (3), qui présente au moins une interface de matériel (3.3) avec un système d'affichage/de saisie (4.1), dans lequel le niveau représentation (3) communique avec le niveau application (2) par l'intermédiaire d'au moins une autre interface (3.2), et dans lequel les objets sont affichés pour l'observateur par l'intermédiaire d'au moins une interface (4.2) dans le système d'affichage (4.1) .

2. Procédé selon la revendication 1, **caractérisé en ce que** les objets sont convertis en des types et/ou paramètres prédéfinis dans le niveau objet (1).

3. Procédé selon la revendication 1 ou 2, **caractérisé en ce que** les objets sont rendus manipulables pour l'observateur au moyen du système de saisie (4.1) par l'intermédiaire d'au moins une interface (4.2).

4. Procédé selon la revendication 1, **caractérisé en ce que** les objets sont mis à jour, supprimés, identifiés, lus et/ou transférés dans le niveau objet (1) par un gestionnaire d'objets (1.1) indépendamment de l'application, et les objets sont stockés dans une librairie d'objets (1.4), dans lequel la communication a lieu entre le gestionnaire d'objets (1.1) et la librairie d'objets (1.4) par l'intermédiaire d'une interface d'objet (1.3), et que le gestionnaire d'objets (1.1) stocke, après la lecture d'un objet et le transfert de l'objet à la librairie d'objets (1.4), dans une liste de références d'objets (1.1.1), l'identification de l'objet et annote, dans une liste d'applications de type d'objet (1.1.2), l'application (2.1, 2.2, 2.3, 2.4, 2.5), qui permet de traiter l'objet dans le niveau application (2).

5. Procédé selon la revendication 1, **caractérisé en ce que** les applications (2.1, 2.2, 2.3, 2.4, 2.5) requièrent du gestionnaire d'objets (1.1) des objets, et le gestionnaire d'objets (1.1) transmet sur demande les objets aux applications (2.1, 2.2, 2.3, 2.4, 2.5) aux fins du traitement.

6. Procédé selon l'une quelconque des revendications 1 à 5, **caractérisé en ce que** dans le niveau application (2), les applications (2.1, 2.2, 2.3, 2.4, 2.5) communiquent avec un moteur d'interface d'utilisateur (3.1) du niveau représentation (3) par l'intermédiaire de l'au moins une interface de représentation (2.1.2, 2.2.2, 2.3.2, 2.4.2, 2.5.2), et que les applications (2.1, 2.2, 2.3, 2.4, 2.5) indiquent au moteur d'interface d'utilisateur (3.1) les éléments d'interface d'utilisateur spécifiques à l'application et/ou spécifiques à l'objet, qui sont requis pour la perception et/ou la manipulation d'objets.

7. Procédé selon l'une quelconque des revendications 1 à 6, **caractérisé en ce que** dans le niveau représentation (3), un moteur d'interface d'utilisateur (3.1) transfère les objets par l'intermédiaire de l'interface de matériel (3.3) à un système d'affichage/de saisie (4.1) pour rendre perceptibles les objets pour un observateur.

8. Procédé selon la revendication 7, **caractérisé en ce que** le moteur d'interface d'utilisateur (3.1) communique avec une librairie d'interface d'utilisateur (3.5) par l'intermédiaire d'une interface de librairie (3.4) et la librairie d'interface d'utilisateur (3.5) communique avec le moteur d'interface d'utilisateur (3.1) par l'intermédiaire d'une interface de moteur d'interface d'utilisateur (3.5.3) pour choisir ou transférer certains éléments d'interface d'utilisateur, qui sont requis pour la perception et/ou la manipulation d'un ou de plusieurs objets.

9. Procédé selon l'une quelconque des revendications 1 à 8, **caractérisé en ce que** la librairie d'interface d'utilisateur (3.5) est entretenue par l'intermédiaire d'une interface d'entretien d'interface d'utilisateur (3.5.4).

10. Procédé selon l'une quelconque des revendications 1 à 9, **caractérisé en ce que** les applications (2.1, 2.2, 2.3, 2.4, 2.5) échangent des objets entre elles.

11. Modèle de niveau terminal servant à utiliser de manière transversale aux applications des objets sur un terminal électronique présentant un niveau objet (1) servant à administrer des objets, un niveau application (2) servant à traiter de manière spécifique à l'application des objets et un niveau représentation (3) servant à rendre perceptibles et à manipuler les objets, dans lequel le niveau objet (1) présente au moins une interface d'application (1.2) avec le niveau application (2), le niveau application (2) présente au moins une interface d'objet (2.1.1, 2.2.1, 2.3.1, 2.4.1, 2.5.1) avec le niveau objet (1) et au moins une interface de représentation (2.1.2, 2.2.2, 2.3.2, 2.4.2, 2.5.2) avec un niveau représentation (3) et le niveau représentation (3) présente au moins une interface d'application (3.2) avec le niveau application (2) et au moins une interface de matériel (3.3) avec un système d'affichage/de saisie (4.1), **caractérisé en ce que** le niveau objet (1) est réalisé pour attribuer une structure de description homogène aux objets indépendamment du support, du type d'objet, du contenu, de l'origine, de l'usage prévu, que les objets sont stockés, mis à jour, supprimés, lus et/ou transférés indépendamment de l'application dans le niveau objet (1), que le niveau application (2) présente une application (2.2) sous la forme d'un gestionnaire d'objets entrants, dans lequel des objets reçus sont vérifiés en ce qui concerne la sécurité, la compatibilité, l'autorisation, le cryptage, les virus, et que les objets sont transmis après la vérification par l'application (2.2) au niveau objet (1), et que le niveau application présente différentes applications (2.1, 2.2, 2.3, 2.4, 2.5), par lesquelles les objets sont créés, modifiés et/ou supprimés de manière spécifique à l'application.

12. Modèle de niveau terminal selon la revendication 11, **caractérisé en ce que** le niveau objet (1) présente au moins un système de stockage (1.6), le niveau application (2) présente au moins un système de stockage (2.6) et le niveau représentation (3) présente au moins un système de stockage (3.6), et/ou que le modèle de niveau terminal présente un système d'affichage/de saisie (4.1), dans lequel le système d'affichage/de saisie (4.1) présente au moins une interface de représentation (4.2) avec le niveau représentation (3).

13. Modèle de niveau terminal selon la revendication 12, **caractérisé en ce que** dans le niveau objet (1), un gestionnaire d'objets (1.1) est prévu, qui communique par l'intermédiaire de l'au moins une interface d'application (1.2), avec le niveau application (2), et que dans le niveau objet (1), une librairie d'objets (1.4) est prévue pour stocker des objets, dans lequel le gestionnaire d'objets (1.1) communique par l'intermédiaire d'au moins une interface d'objet (1.3) avec la librairie d'objets (1.4).

14. Modèle de niveau terminal selon l'une quelconque des revendications 12 ou 13, **caractérisé en ce que** le système de stockage (2.6) du niveau application (2) est réalisé pour stocker des applications (2.1, 2.2, 2.3, 2.4, 2.5) liées à un service.

15. Modèle de niveau terminal selon l'une quelconque des revendications 11 à 14, **caractérisé en ce que** le niveau représentation (3) présente au moins un moteur d'interface (3.1) et une bibliothèque d'interface (3.5), dans lequel le moteur d'interface (3.1) servant à communiquer avec la bibliothèque d'interfaces (3.5) présente une interface de librairie (3.4) et la bibliothèque d'interfaces (3.5) servant à communiquer avec le moteur d'interface (3.1) présente une interface de moteur d'interface d'utilisateur (3.5.3), et/ou que la librairie d'interfaces d'utilisateur (3.5) présente une interface d'entretien d'interface d'utilisateur (3.5.4).

16. Modèle de niveau terminal selon l'une quelconque des revendications 11 à 15, **caractérisé en ce que** les applications (2.1, 2.2, 2.3, 2.4, 2.5) liées aux services sont un gestionnaire d'applications (2.1), un gestionnaire de notifications (2.3), un gestionnaire d'objets sortants (2.4) et un gestionnaire de journaux (2.5) .

17. Terminal électronique servant à utiliser de manière transversale aux applications des objets, **caractérisé en ce qu'**il présente un modèle de niveau terminal selon l'une quelconque des revendications 11 à 16.

18. Terminal électronique selon la revendication 17, **caractérisé en ce qu'**il présente un dispositif servant à envoyer et à recevoir des objets.
